# EUROPEAN PATENT APPLICATION

(11) **EP 2 108 904 A1**
(43) Date of publication of application: **14.10.2009**
(21) Application number: 08405097.0
(22) Date of filing: 07.04.2008
(51) Int. Cl.: F25B 21/00, H01F 7/02

(54) **A magnetocaloric device, especially a magnetic refrigerator, a heat pump or a power generator**

(71) Applicant: Haute Ecole d'Ingénierie et de Gestion du Canton de Vaud (HEIG-VD), 1400 Yverdon-Les-Bains (CH)
(72) Inventor: Kitanovski, Andrej, 1000 Ljubljana (SI); Vuarnoz, Didier, 1003 Lausanne (CH); Egolf, Peter W., 5702 Niederlenz (SI)
(74) Representative: Nithardt, Roland

(57) **Abstract**

The invention concerns a magnetocaloric device, especially a magnetic refrigerator, a heat pump or a magnetic power conversion machine comprising at least a permanent magnet assembly (4, 11) for generating magnetic flux, a rotating ring (2) coaxially disposed to the permanent magnet assembly, a structure containing magnetocaloric material mounted inside the rotating ring (2) and means for conducting a working fluid through the rotating ring (2). The permanent magnet assembly (4, 11) comprises a set of permanent magnets and at least one insert of highly permeable material (1, 9) attached to the magnet assembly (4, 11) adapted for creating high magnetic flux densities around and inside of the rotating ring (2).

## Description

### Technical Field

The present invention relates to a magnetocaloric device, especially a magnetic refrigerator, a heat pump or a power generator comprising, at least a permanent magnet assembly for generating magnetic flux, a coaxial rotating ring disposed to the said permanent magnet assembly, a structure containing magnetocaloric material mounted inside the said rotating ring and means for conducting a working fluid through the said rotating ring.

### Background Art

Magnetic refrigeration that is a technology applying the magnetocaloric effect (MCE), is well known and a number of patents disclose industrial applications of this technology. The first "room temperature" magnetic refrigerator, containing permanent magnets, was designed and built in 2001 by the Astronautics Corporation of the USA. The early prototypes did not reach high magnetic flux densities in the magnetocaloric material without use of superconducting magnets instead of permanent ones. In the meantime few permanent magnets based prototypes operating at magnetic field densities between 1.5 and 2 Tesla, were built what shows significant improvements, related also to the Coefficient of Performance. The research in magnetic refrigeration is focused nowadays on improvements on magnetocaloric materials, thermo and fluid dynamic and construction properties of devices, as well as on magnets or magnetic flux densities. Higher the magnetic flux density is, less heat transfer processes are needed, e.g. cascades, regeneration. It is also well known that heat transfer leads to irreversible losses and therefore to reduced efficiency of a refrigerator. When having very high magnetic flux densities, this will lead first to a larger magnetocaloric effect. Consequently, less stages or regeneration processes lead not only to reduced heat transfer irreversibility, but also to substantially reduced pressure losses, since each heat transfer process based on convection requires fluid flow and therefore piping connections inducing high investment costs.

The following references concern prior art documents relating to applications of the magnetocaloric effect concerning rotary magnetic refrigeration or heat pumps.
[1] Warburg E. Magnetische Untersuchungen über einige Wirkungen der Koerzitivkraft. Ann. Phys. 1881; 13: 141 -164.
[2] N. Tesla, Pyromagneto-electric generator, US patent 428,057, May 18, 1890.
[3] T.A. Edison, Pyromagnetic generator, US patent 476,983, June 14, 1892.
[4] Weiss, P, Piccard A. Sur un nouveau phénomène magnétocalorique, Compt. Rend. Ac. Sc. 1918; 166: 352.
[5] Debye P. Einige Bemerkungen zur Magnetisierung bei tiefer Temperatur. Ann Phys. 1926; 81: 1154-1160.
[6] Giauque WF. A thermodynamic treatment of certain magnetic excess. A proposed method of producing temperatures considerably below 1° absolute. J. Amer. Chem. Soc. 1927; 49: 1864 -1870.
[7] Giauque WF, MacDougall DP. Attainment of temperatures below 1° absolute by demagnetization of Gd2(SO4)3·8H2O. Phys. Rev. Lett. 1933; 43(9): 768.
[8] Brown GV. Magnetic heat pumping. US Patent 4.069.028, 1978 (filed in Nov. 1976).
[9] Brown GV. Magnetic heat pumping near room temperature. J. Appl. Phys. 1976; 47: 3673 -3680.
[10] Zimm CB, Sternberg A, Jastrab AG, Boeder AM, Lawton LM, Chell J.J, Rotating bed magnetic refrigeration apparatus. US Patent 6.526.759.4, 2003 (Filed in Aug.2001).
[11] K.A. Gschneidner, V.K. Pecharsky, 30 Years of near room temperature magnetic cooling, 2nd International Conference on Magnetic Refrigeration at Room Temperature, Portoroz, Slovenia, 2007
[12] T.Okamura et al., Performance of a room-temperature rotary magnetic refrigerator, Int. Journ. Of Refr. 29(2007), pp.1327-1331
[13] C.Zimm et al., Design and performance of a permanent magnet rotary refrigerator, Int. Journ. Of Refr. 29(2007), pp.1302-1306
[14] Barclay J.A., 1983a, Wheel-type magnetic refrigerator, US Patent No. 4,408,463 (October 11)
[15] J.A.arclay, Use of a ferrofluid as the heat exchange fluid in a magnetic refrigerator, J.Appl,Phys. 53(4), 1982
[16] Steyert W.A., 1978, Stirling-cycle rotating magnetic refrigerators and heat engines for use near room temperature, J. Appl. Phys., vol. 49, p. 1216-1226.
[17] Steyert W.A., 1978, Rotating Carnot-cycle magnetic refrigerators for use near 2 K, J. Appl. Phys., vol. 49, p. 1216-1226.
[18] Steyert W.A., 1978, Stirling-cycle rotating magnetic refrigerators and heat engines for use near room temperature, J. Appl. Phys., vol. 49, p. 1216-1226.
[19] C.Zimm et al, Rotating bed magnetic refrigeration apparatus, WO 02/12800
[20] P.W.Egolf, A.Kitanovski, Fabrice Gendre, Derrick Ata-Caesar, Continuously rotary magnetic refrigerator or heat pump, WO 2006/136042
[21] X.Bohigas, E.Molins, A.Roig, J.Tejada, X.X. Zhang, Room temperature Magnetic Refrigerator Using Permanent Magnets, IEEE Transactions on Magnetics, vol. 36,no. 3, May, 2000
[22] Anthony J. DeGregoria et al., Active magnetic refrigerator and apparatus, US 5.249.424, 1993
[23] J.A.Barclay, Low-temperature magnetic refrigerator, US 4.507.927, 1985
[24] Aharon Z. Hed, Magnetic heat pumps using the inverse magnetocaloric effect, US 5.091.361, 1992
[25] Walter Peschka, Gottfried Schneider, Apparatus for magnetocaloric refrigeration, US 4.727.721, 1988
[26] Muller Christian et al., Heat Generator Comprising a Magnetocaloric material and thermie generating, WO 2005/095872
[27] Kitanovski Andrej, Peter W. Egolf, Sari Osmann, Method and device for continuous generation of cold and heat by means of the magnetocaloric effect, WO2004/059221
[28] Akiko Saito et al, Magnetic material, US 2003/0051774
[29] C.Zimm et al., Rotating magnetic refrigerator, WO 03/0504456
[30] Wada Hirofumi, Satoshi Hirosawa, Magnetic refrigerant material, regenerator and magnetic refrigerator, WO 03/009314
[31] Chell et al., 2005, Permanent magnet assembly, US 2005/0242912
[32] CHEN Y.G., TANG Y.B., WANG B.M., XUE Q.X., TU M.J, A permanent magnet rotary magnetic refrigerator, Second IIF-IIR International Conference on Magnetic Refrigeration at Room Temperature, Portoroz, Slovenia, 11-13 April 2007
[33] A. ROWE, A. TURA, Active magnetic regenerator performance enhancement using passive magnetic materials, Second IIF-IIR International Conference on Magnetic Refrigeration at Room Temperature, Portoroz, Slovenia, 11-13 April 2007
[34] L.D. Kirol, Rotary Magnetic Heat Pump, US 4.727.722, 1988
[35] G. Bon-Mardion, G. Claudet, L. Meylan, Refrigerating or Heat Pumping Process and Apparatus, US 4.441.325, 1984
[36] Liventsov V.M., Khudyakova T.S., Magnetic heat pump, SU877262, 1981
[37] Howard F., Magnetic heat pump flow director, US5444983, 1995
[38] N. Tesla, Pyromagneto-electric generator, US patent 428,057, May 18, 1890.
[39] T.A. Edison, Pyromagnetic generator, US patent 476,983, June 14, 1892.
[40] E. L. Resler Jr, R. E. Rosensweig, Magnetocaloric power, AIAA Journal, Vol.2, 8, 1964, pp. 1418-1422.
[41] E. L. Resler Jr, R. E. Rosensweig, Regenerative Thermomagnetic Power, Journal of Engineering for Power 89, 1967, pp. 399-406.
[42] E. Van der Voort, Ideal Magnetocaloric Conversion, Appl. Sci. Res. 20, 1969, pp.98- 114.
[43] C. Chilowsky, Thermomagnetic generator and refrigerator, US 2.619.603, 1952
[44] Technical Assets, Improvements in and Relating to Thermomagnetic Generators and Refrigerators, GB 674.284, 1952
[45] L. J. Love at al, A Magnetocaloric Pump for Lab-On-A-Chip Technology: Phase 1 Report, Oct.2003, ORNL/TM-2003/245, DOE document.
[46] L. D. Kirol, J. I. Mills, Thermomagnetic generator, Proc., Intersoc. Energy Convers. Eng. Conf., Vol/Issue: 3; Intersociety energy conversion engineering conference; 19 Aug 1984; San Francisco, CA, USA, pp. 1361-1368.
[47] L. D. Kirol, J. I. Mills, Numerical analysis of thermomagnetic generators, J. Appl. Phys., Vol 56 (3), 1984, pp. 824-828
[48] D. Salomon, Thermomagnetic mechanical heat engines, J.Appl. Phys., Vol. 65 (9), 1989, pp. 3687-3693
[49] J.F. Elliott, Thermomagnetic Generator, J. Appl. Physics, Vol.30 (11), 1959, pp. 1774-1777.
[50] C.Muller et al., Heat generator comprising a magneto-caloric material and thermie generating method, WO 2005/095872
[51] D.Schulz, Method and device for converting heat into mechanical or electrical power, WO 2005/017353
[52] C.Muller et al, Device and method for generating thermal units with magnetocaloric material, WO 2005/103585
[53] J.L. Dupin et al, Thermal generator having a magnetocaloric material, WO 2007/026062

In any of the above prior art references the magnetic flux direction is parallel to the direction of "source" (push) magnet pole and "sink" (pull) magnet pole. This approach is very good when strictly homogeneous magnetic field is required. The magnetic flux density in such cases is usually given in the air gap between two poles mentioned above. Depending on the relative permeability of material, which is placed in the air gap, the magnetic flux density may be increased, however, not so substantially and it does not play so important role as proposed in this invention.

Most of the upper references [1-27] do not refer to the use of magnetocaloric material in form of a full or a porous, e.g. wavy or honeycomb structure by use of specially shaped tiny plates as rough material. This kind of performance is extremely important because it enables efficient use of gases as working fluids. Furthermore, use of any kind of fluid (gas or liquid) will lead to smaller pressure losses when compared to the packed beds of grains of magnetocaloric material. In addition, this kind of configuration allows in many cases higher frequencies when compared to conventional packed beds of grains. When compared to parallel plates, this kind of structure gives rigidity and on the other hand also flexibility to the ring, which is exposed, especially in high magnetic fields, to very strong forces.

The magnetic power is based on a temperature difference of the material in the magnetic field, the same principle being applicable on magnetized permanent magnet materials, which causes the difference of magnetization of material. For example, when a material is in a ferromagnetic state, it is attracted to the magnetic field. If there is heat added to a material, the magnetization will decrease. The consequence for this is that the magnetocaloric material is not attracted or at least less attracted to the magnetic field. In the thermodynamically opened system, the difference between the force of attraction to the field and force on the magnetocaloric material after it was heated in a magnetic field, gives a force to move the material. This however may be converted into useful work by different applications. The advantage of such systems may be also utilization of heat energy with low temperature (low exergy of heat) from any kind of heat sources: different processes, from solar energy, geothermal energy, etc. The advantage of such systems may be also a direct conversion into electric energy without use of additional mechanical devices or use in a special heat driven refrigerator/heat pump.

The magnetic power is a research domain, which has started already in late 19^{th} century, when the two scientists, Tesla [38] and Edison [39] patented their ideas related to a paramagnetic generator. Mainly the research in this domain was dedicated after to the use of magnetocaloric fluids (a mixture of magnetocaloric particles and a carrier fluid) in order to produce power. This may be found in following references (28, 29, 31, 32, 33, and 34). There exist also proposals in order to make a static device (see following references 35, 36, 37, and 38).

### Disclosure of Invention

A magnetocaloric device, especially a magnetic refrigerator, a heat pump or a power generator, of the present invention, as defined above, is characterized in that the permanent magnet assembly comprises a set of permanent magnets and at least one insert of highly permeable material attached to the magnet assembly adapted for creating high magnetic flux densities inside the said rotating ring.

According to a first example of realization, the said permanent magnet assembly is a 2D having approximately two dimensional flow of magnetic flux when considering magnet assembly, with such arrangements of magnets that the magnetic flux, where the highest density occurs, is passing the magnetocaloric material, and the magnetic flux through the magnetocaloric material, being at least approximately perpendicular to the magnetization directions of permanent magnet parts, which present "source" and "sink" of magnetic flux.

According to a second example of realization, the said permanent magnet assembly is a 3D having approximately a three-dimensional flow of magnetic flux through the magnet assembly with such specifics, that all the magnetic flux lines concentrate in the magnetocaloric material of the said rotating ring.

The said permanent magnet assembly may present a plural number of multipole permanent magnets or arrangements, which are similar to magnetic flux lines in magnetospheres, the magnetic flux through the magnetocaloric material, at least where the highest density of magnetic flux occurs, is preferably at least approximately perpendicular to the magnetization directions of permanent magnet parts, which present "source" and "sink" of magnetic flux.

The said permanent magnet assembly may comprise an external ring and an internal ring of permanent magnets and comprise an additional special magnet for concentrating the magnetic flux density.

Said external and said internal rings of permanent magnets have advantageously the shape of ring parts and extend on an angular sector smaller than 180°.

Said external and said internal rings of permanent magnets may also have the shape of ring parts are respectively attached to an external ring part and an internal ring part of highly permeable material for leading the magnetic flux density in a desired azimuth direction, said ring parts of highly permeable material having a similar angular extension that the ring parts of magnets.

Said external and said internal rings may be composed each of a number of magnets with different direction of magnetization having at least four regions with the highest magnetic flux density spaced each from the other by an angle of about 45° and are respectively attached to at least an external ring and an internal ring of highly permeable material for leading the magnetic flux density in a desired azimuth direction.

Said external and said internal rings of permanent magnets have advantageously the shape of ring parts and extend on an angular sector of about 180° and are respectively attached to an external ring part and an internal ring part of highly permeable material for leading the magnetic flux density in a desired azimuth direction, said ring parts of highly permeable material having a similar angular extension as the ring parts of magnets.

If the magnet assembly comprising only an external ring of permanent magnets, said external ring of magnets may have the shape of a ring part and extends on an angular sector of about 180°, said external ring of magnets being attached to an external ring part of highly permeable material for leading the magnetic flux density in a desired azimuth direction, having a similar angular extension as the ring part of magnets and in which the coaxial ring is attached to an internal ring of highly permeable material.

According to one example of realization, the permanent magnets are arranged to provide a distribution of the magnetic flux density in azimuth direction.

According to another example of realization, the permanent magnets are arranged to provide a distribution of the magnetic flux density in axial direction.

The permanent magnet assembly may comprise a first external permanent magnet group and a second internal permanent magnet group, a first fluid gap (e.g. air gap) is located between the first external permanent magnet group, and the rotating ring and a second fluid gap is located between the second internal permanent magnet group and the rotating ring.

The coaxial ring has a full or a porous structure and may be associated with means for enabling the flow of heat exchange fluids in a radial direction.

The magnetic refrigerator, the heat pump or the power generator may comprise a plural number of permanent magnet assemblies each provides with at least one permanent magnet, the said assemblies being located on both sides of the rotating ring, the permanent magnets of each magnet assembly having a radial magnetic flux direction.

A magnetocaloric device, especially a magnetic refrigerator, a heat pump or a power generator may have a permanent magnet assemblies with a first central axis and the rotating ring has a second central axis, both axis being parallel.

According to an advantageous construction, the magnet assemblies have a circular shape. The permanent magnet assemblies may have an angular shape.

The permanent magnet assemblies may be made of four trapeze-like shape elements located each at an angle of 45°, or smaller from the neighbour elements.

The magnetocaloric device, especially the magnetic refrigerator, the heat pump or the power generator may comprise two magnet assemblies having a first central axis and the rotating ring has a second central axis, both axes being parallel and symmetrically disposed with respect to the central axis of the rotating ring. It may comprise means for conducting heat exchange fluids in the axial direction of the rotating ring.

Different combinations of fluid connections as well as of the fluid utilization in presented solutions of this invention may lead to different thermodynamic cycles. Theoretically it means that any kind of thermodynamic cycle is possible to be performed when using solutions presented in this invention.

To transfer heat, fluid may be used in a form of a gas, liquid, suspension, nanofluid. In special cases, instead of convective heat transport, radiation or conduction may be used.

In the magnetocaloric device, especially the magnetic refrigerator, the heat pump or the power generator of the present invention, the rotating ring consists of a special full or porous structure, e.g. wavy, honeycomb or other similar types of structures of magnetocaloric material, where the magnetocaloric effect occurs due to the change of magnetic flux density, performed by use of such permanent magnet configuration, which leads to high magnetic flux densities in the magnetocaloric material. The magnetic flux density change in material occurs whether due to the rotation of the coaxial ring, or by the rotation of magnet configuration or in some special cases, by rotation of both. In a special case it may occur due to the temperature change of the permanent magnet.

In the case of the magnetocaloric device, especially the magnetic generator of the present invention, the coaxial ring consists of a material with a special full or porous structure, e.g. wavy, honeycomb or other similar types of structure. This material has a property of temperature and field dependent magnetization. The driving force to rotate the coaxial ring uses a permanent magnet assembly as a field source and uses a temperature variation in the ring. If the ring is static, the magnet assembly may rotate. A special case of the magnetic field variation may be presented by introducing a temperature variation on the permanent magnet.

### Brief Description Drawings

- Figures 1A and 1B represent an example of a two-spot 2D rotary magnetocaloric device, especially the magnetic refrigerator, the heat pump or the generator according to the invention,
- Figure 2 shows the variation of magnetic density within the coaxial ring of the device of Figures 1A and 1 B,
- Figures 3A and 3B represent another example of a two-spot 2D rotary magnetocaloric device according to the invention,
- Figures 4A and 4B represent another example of a four-spot 2D rotary magnetocaloric device according to the invention,
- Figure 5 shows the variation of magnetic density within the coaxial ring of the device of Figures 4A and 4B,
- Figures 6A and 6B represent an example of a one-spot 2D rotary magnetocaloric device according to the invention,
- Figures 7A and 7B represent a similar configuration as that of the figures 6A and 6B,
- Figures 8A, 8B and 8C represent another 2D rotary magnetocaloric device according to the invention,
- Figures 9A, 9B and 9C represent further example of a two-spot 2D rotary magnetocaloric device according to the invention,
- Figures 10A, and 10B represent another two-spot 2D rotary magnetocaloric device according to the invention,
- Figures 11A and 11B represent an example of a four-spot 2D rotary magnetocaloric device according to the invention,
- Figures 12A and 12B represent another example of a four-spot 2D rotary magnetocaloric device according to the invention,
- Figures 13A, 13B and 13C represent a two-spot 2D rotary magnetocaloric device according to the invention, Figures 13B and 13C showing transverse cut views along lines A-A and B-B of Figure 13A,
- Figures 14A, 14B and 14C represent another example of a two-spot 2D rotary magnetocaloric device according to the invention, Figures 14B and 14C showing transverse cut views along lines A-A and B-B of Figure 14A,
- Figures 15A, 15B and 15c represent a first example of a one-spot 3D "doughnut" type rotary magnetocaloric device according to the invention, Figures 15B and 15C showing transverse cut views along lines A-A and B-B of Figure 15A,
- Figures 16A, 16B and 16c represent a second example of a one-spot 3D "doughnut" type rotary magnetocaloric device according to the invention, Figures 16B and 16C showing transverse cut views along lines A-A and B-B of Figure 16A,
- Figures 17A, 17B and 17C represent a third example of a one-spot 3D "doughnut" type rotary magnetocaloric device according to the invention, Figures 17B and 17C showing transverse cut views along lines A-A and B-B of Figure 17A,
- Figures 18A, 18B and 18C represent a first example of a four-spot 3D "doughnut" type rotary magnetocaloric device according to the invention, Figures 18B and 18C showing transverse cut views along lines A-A and B-B of Figure 18A,
- Figures 19A, 19B and 19C represent another example of a one-spot 3D "doughnut" type rotary magnetocaloric device according to the invention, Figures 19B and 19C showing transverse cut views along lines A-A and B-B of Figure 19A,
- Figures 20A, 20B and 20C represent an example of a two-spot 3D "doughnut" type rotary magnetocaloric device according to the invention, Figures 20B and 20C showing transverse cut views along lines A-A and B-B of Figure 20A,
- Figure 21 shows an example of magnetic flux density in a two-spot 3D "doughnout" type of magnetocaloric device according to the invention,
- Figure 22 is a perspective view representing the device of Figure 15 or 17
- Figures 23A, 23B and 23C represent another example of a one-spot 3D "magnetosphere" type rotary magnetocaloric device according to the invention, Figures 23B and 23C showing transverse cut views along lines A-A and B-B of Figure 23A,
- Figures 24A, 24B and 24C represent another example of a one-spot 3D "magnetosphere" type rotary magnetocaloric device according to the invention, Figures 24B and 24C showing transverse cut views along lines A-A and B-B of Figure 24A
- Figure 25 shows an example of the magnetic flux distribution in a one spot 3D " magnetosphere" type rotary magnetocaloric device according to the invention,
- Figures 26A and 26B represent an example of a one-spot 3D "magnetosphere" type rotary magnetocaloric device according to the invention,
- Figures 27A, 27B and 27C represent another example of a one-spot 3D "doughnut" type rotary magnetocaloric device according to the invention,
- Figures 28A, 28B and 28C represent a special configuration of a 3D magnetocaloric device according to the invention,
- Figures 29A and 29B represent a special configuration of a 3D magnetocaloric device according to the invention,
- Figures 30A and 30B represent another special configuration of a 3D magnetocaloric device according to the invention,
- Figure 31 represents an example of a heat-driven magnetocaloric device, especially a magnetic refrigerator using a single coaxial ring according to the invention
- Figure 32 represents a 3D view of the concept presented in Figure 28,
- Figure 33 represents a 3D view of the concept presented in Figures 29 and 30
- Figures 34A. 34B and 34C represent another special configuration of a 3D magnetocaloric device according to the invention.

### Mode(s) for Carrying Out the Invention

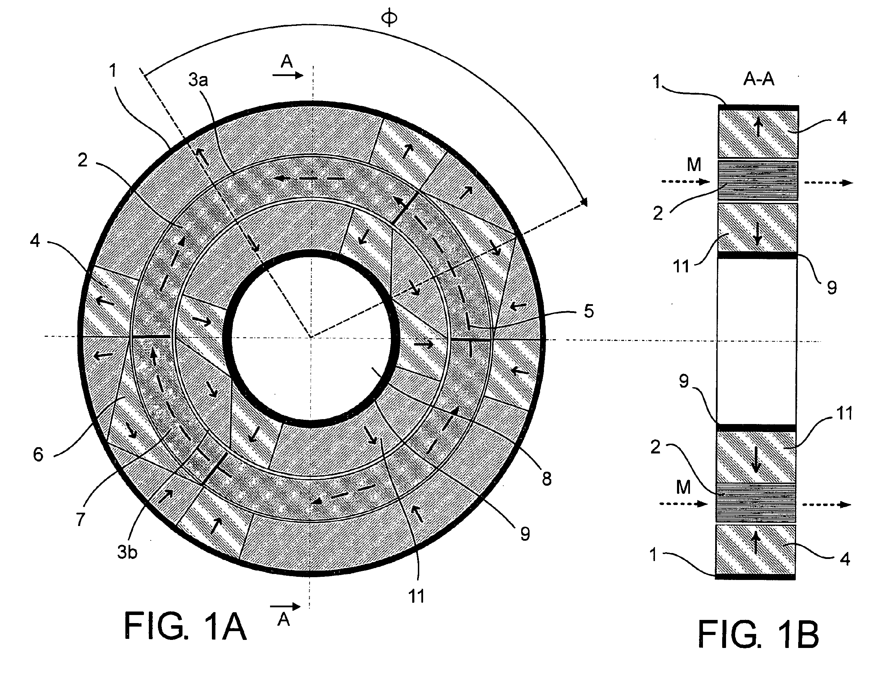

Figures 1A and 1B show a rotary magnetocaloric device, especially the magnetic refrigerator/heat pump or a generator based on the 2D arrangement of magnet assembly. A coaxial ring 2 is placed between two rings of magnet assembly 4, 11, which consist of plural number of magnets with different direction of magnetization. In order to improve magnetic flux density and prevent the flux leakage, the magnet assembly may be attached to permeable material rings 1, 9, which lead the magnetic flux in desired azimuth direction. Air gaps 3a and 3b, respectively located between the coaxial ring 2 and the external magnet assembly ring 4 and between the coaxial ring 2 and the internal magnet assembly ring 11 should be as small as possible. The area of the coaxial ring 2 with the highest magnetic flux density 7 is shaded in the Fig.1A. Because of magnet arrangements, the magnetic refrigerator/heat pump or a generator in the Figure 1A consist of two such shaded regions of highest magnetic flux density. A special magnet part 6 helps to orient the magnetic flux in desired rotation. It may present also different kinds of shapes. The longer dashed curved lines 5 present the main stream of magnetic flux in the coaxial ring in azimuth direction.

It is to be noted, that the magnetic flux, contrary to other types of known magnetic refrigerators/heat pumps or generators, flows in azimuth direction, especially in the part of the highest magnetic flux density, which occurs in the shaded region. It is therefore, at least in the region of highest magnetic flux density, somehow perpendicular to the magnetization direction of other magnets, which form the whole magnet assembly. A central space 8 may serve for driving shaft or for locating fluid valves, piping, connections, pumps, motors, electric generators, etc.

The fluid flow, see arrow M in Fig 1 B may be performed in different ways and directions. However, inside the coaxial ring 2 it flows preferably in axial direction. At least one area 7 presents the highest magnetic flux density in the coaxial ring 2, whereas at least one area, which is most far away from that region, presents the lowest magnetic flux density. Different thermodynamic processes are possible, an active regenerative process is possible, as well as a kind of cascade system. The shape of the magnet assembly may be performed also in other, non-rounded shape, depending on the specific application.

The angle φ denotes the region, which is occupied by permanent magnet and this may vary depending on specific application.

One should note that there exist different possibilities of performing the configuration, based on the Figures 1A and 1 B.

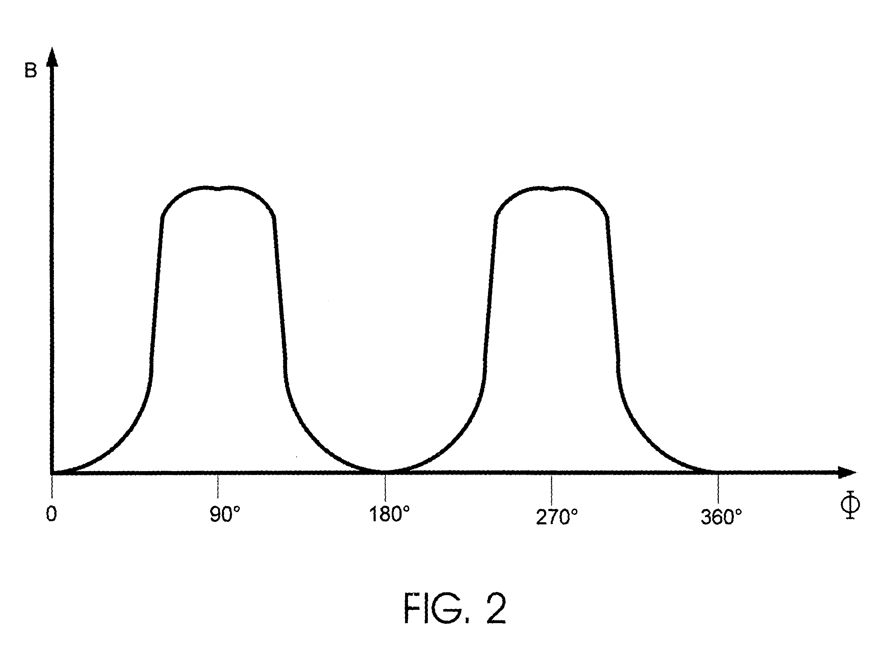

Figure 2 shows an example of the magnetic flux density distribution in the coaxial ring 2 of the Figures. 1A and 1 B

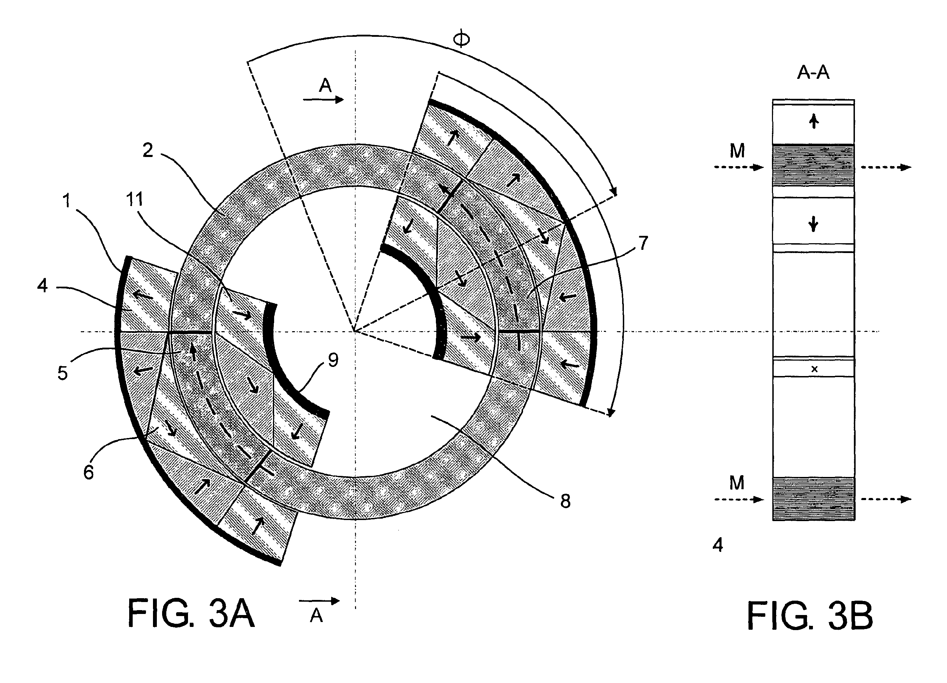

As shown in the Figures 3A and 3B, the coaxial ring 2 rotates through magnetic field performed by two separated permanent magnet assemblies 4, 11, whereas the magnet assemblies may be attached also to permeable material 1 and 9 in order to prevent magnetic flux leakage, to better orient magnetic flux and consequently increase the magnetic flux density in the desired area. In the case of Figure 3A, the magnet assemblies extend over an angle α of about 45°, but this may be also of other degrees. It is to be noted that also magnet assemblies 4, 11 could rotate instead of coaxial ring 2. The magnetic flux direction is similar as in Fig.1A and 1 B in azimuth direction (see arrow 5) at least in the region with highest magnetic flux density 7. A special magnet 6 is used for the magnetic flux orientation, as well as for the concentration at desired point. Shorter this kind of magnet will be, smaller will be the region of high magnetic flux density and larger will be magnetic flux density within that region. The shaded region presents the area with the highest magnetic flux density. The angle φ denotes the region, which is occupied by permanent magnet and this, may vary depending on specific application. On should note, that a plural number of magnet assemblies and therefore regions with very high magnetic flux density may be used, not only two, as presented in the Fig. 3A. This depends on specific application.

The working fluid (sea arrow M) flows through the structure of coaxial ring 2 preferably in axial direction. The available internal space 8 may be used for axle, fluid connections, valves, motor, generator or some other mechanisms or elements. The magnetic flux distribution would look similar to one presented in Figures 1A and 1B, with the difference, that the magnetic flux density in the case of Figures.3A and 3B cannot reach so high values as in the case of Fig 1A and 1B. Such a configuration, as presented in the Figures.3A and 3B enables one to perform a magnetic refrigerator/heat pump or generator with a plural number of magnet assemblies, not only two which are shown in the Fig.3A and 3B. Similar as in the case of the Figures. 1A and 1B, the change of magnetic flux density in the material may be achieved by rotation of coaxial ring, by rotation of magnet assemblies or even by both. The permeable material attachments 1 and 9 are not necessary, but they substantially improve performance. The shape of the magnet assembly may be performed also in other, non-rounded shape, depending on specific application.

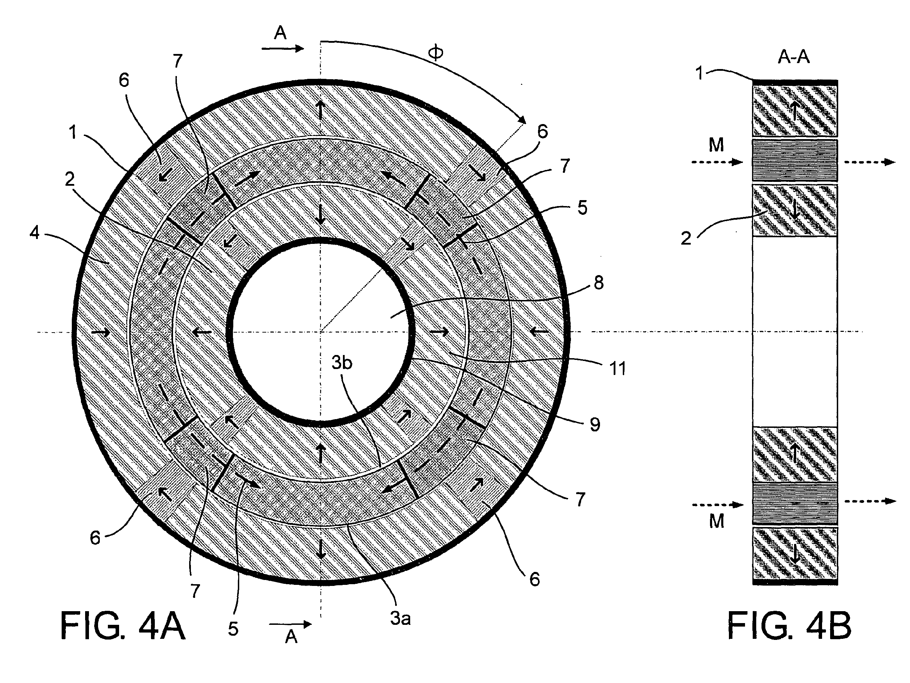

Similar as presented in the Figures. 1A and 1 B, the magnetic refrigerator/heat pump or a generator may be performed in the sense of having four regions 7 of the highest magnetic flux density. This kind of solution is shown in the Figures 4A and 4B representing a device comprising a coaxial ring 2 placed between two rings of magnet assembly 4, 11, which consist, similarly to the device of Figures 1A and 1 B, of plural number of magnets with different direction of magnetization. In order to improve magnetic flux density and prevent the flux leakage, the magnet assembly may be attached to permeable material rings 1, 9, which lead the magnetic flux in desired azimuth direction (see arrows 5). Air gaps 3a and 3b, respectively located between the coaxial ring 2 and the external magnet assembly ring 4 and between the coaxial ring 2 and the internal magnet assembly ring 11 should be as small as possible. Four areas 7 of the coaxial ring 2 with the highest magnetic flux density are shaded in Fig.4A. Because of magnet arrangements, the device represented by the Figure 4A has four such shaded regions with the highest magnetic flux density. Special magnet parts 6 help to orient the magnetic flux in the desired direction. The longer dashed curved lines 5 present the main stream of magnetic flux in the coaxial ring. A central space 8 may serve for driving shaft or for locating fluid valves, piping, connections, pumps, motors, electric generators, etc.

Four regions of the highest magnetic flux density 7 present also different distribution of magnetic flux density in the coaxial ring. Different thermodynamic processes are possible, an active regenerative process is possible, as well as a form of a cascade system. At least one shaded area 7 presents the part of the coaxial ring with the highest magnetic flux density, whereas at least one area, which is most far away from that region (e.g. the beginning of the angle φ), present the lowest magnetic flux density region. The shape of the magnet assembly may be performed also in other, non-rounded shape, depending on specific application.

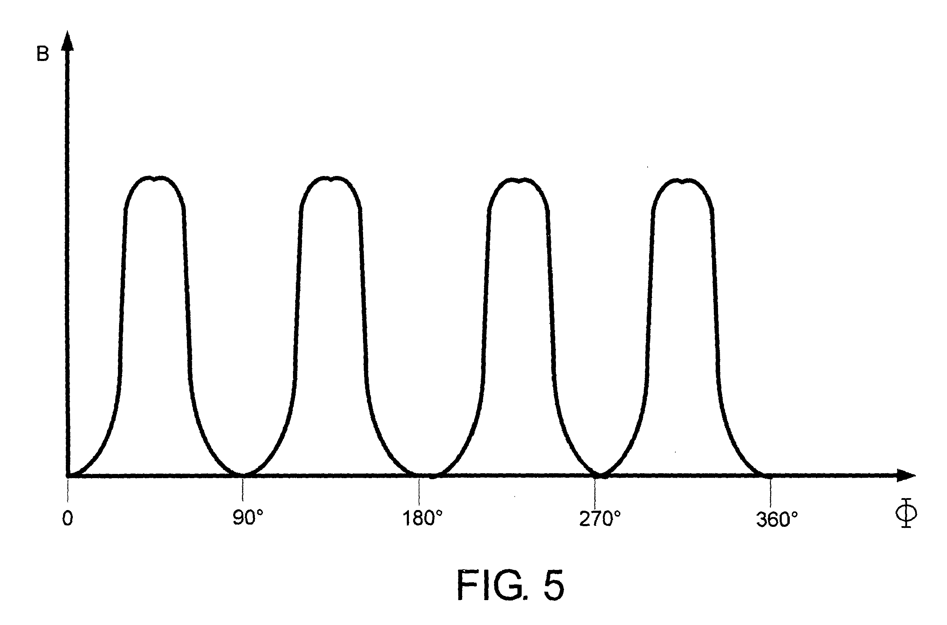

An example of the kind of distribution is presented in the Figure 5. The magnetic flux direction, at least in the region of the highest magnetic flux is in azimuth direction.

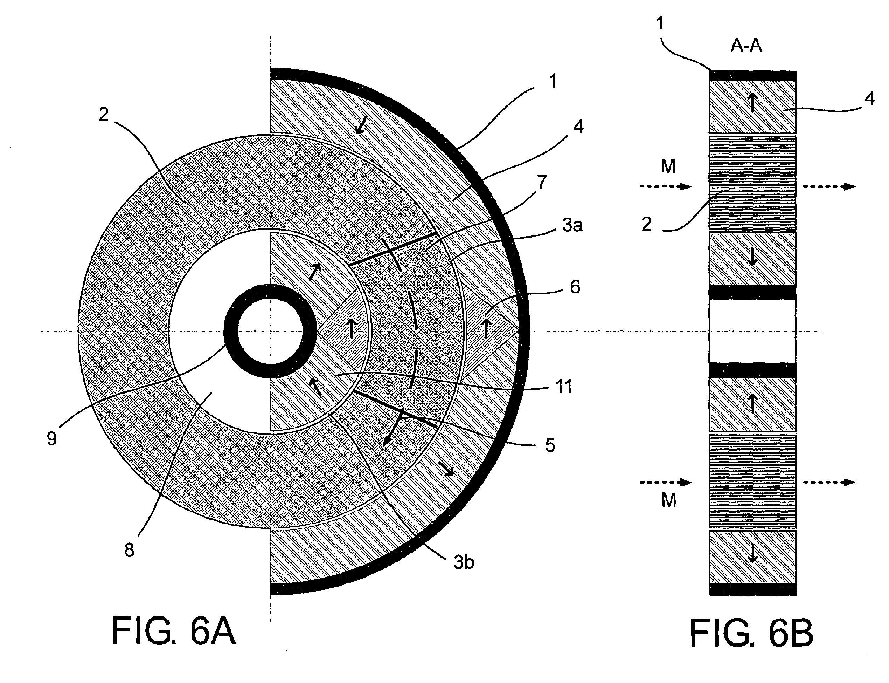

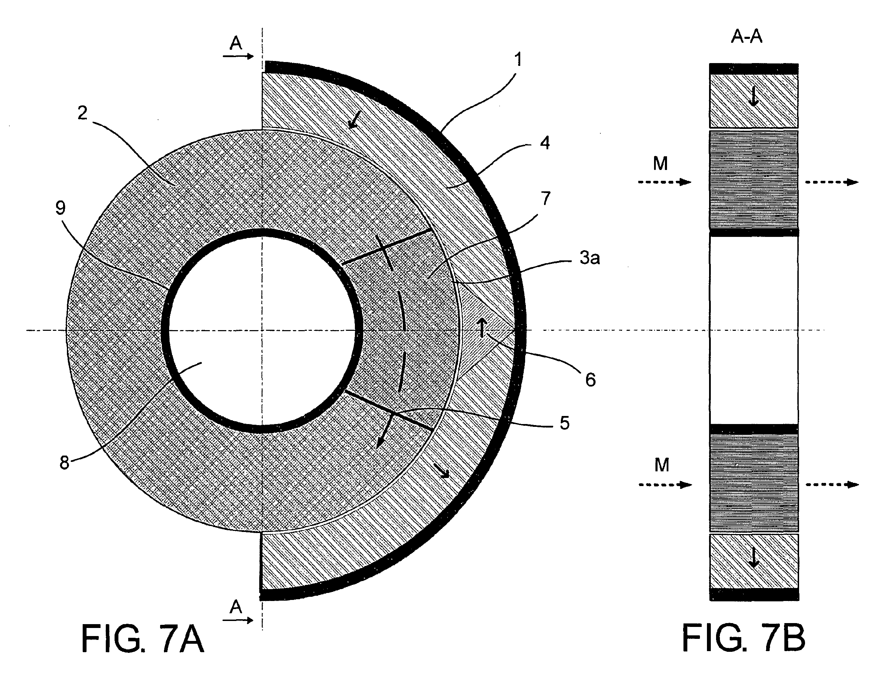

In the case, when only one area of high magnetic flux density is desired, but the principle of Figures. 1A, 1B; 3A, 3B, and 4A, 4B is kept, this leads to a special configuration, which is presented in Figures 6A, 6B and 7A, 7B.

According to the Figures. 6A and 6B, a coaxial ring 2 rotates through the magnetic field (note that also magnet could rotate instead of coaxial ring), performed by the magnet assembly 4, 11. The magnet assembly may have attached the permeable material 1 and 9, in order to provide better magnetic flux direction and prevent magnetic flux leakage. The "rotation" through magnet assemblies by the magnetic flux is performed by a special magnet 6. Between such two special magnets 6 (outer and inner permanent magnet assembly rings 4, 11), there is also the highest magnetic flux density area 7 in the coaxial ring. The permeable material 9 does not need to be of such a shape or even does not necessarily need to be or exist as a part of configuration. The shape of the magnet, despite being not performed in the full ring, still leads to the magnetic flux main stream in azimuth direction represented by arrow 5, especially in the region of the very high magnetic flux density 7. The magnet assembly 4, 11 as well as the permeable material 1, 9 may cover different areas, not necessarily only as the one presented in the Figures. 6A, 6B, where they cover half of the coaxial ring. The fluid represented by arrow M may flow in different ways, but preferably in axial direction through the coaxial ring. The shape of the magnet assembly may be performed also in other, non-rounded shape, depending on specific application.

Figures 7A and 7B present similar configuration as one of the Figures 6A and 6B, without having an inner magnet assembly 11, what would lead to lower magnetic flux density, but on the other hand to a much simpler device. Usually the same components are designated by the same reference numbers. The inner permeable material 9 in this case may be helpful for the magnetic flux "capturing".

The devices shown by the above figures correspond to one type of a 2D magnetic refrigerator/heat pump or a generator. The magnetic flux density may be maximal in solutions presented in Figures. 1A, 1 B and 4A, 4B and the lowest possible in Figures. 7A, 7B. In any of presented cases, special inserts made of highly permeable material may lead to increased magnetic flux density in the coaxial ring. These may be performed in several different shapes, sizes, at different positions and from different materials, however, a special material presenting the full or a porous structure, performed as the homogeneous mixture of nano- or micro-sized permeable and magnetocaloric material(s) would lead to best solution.

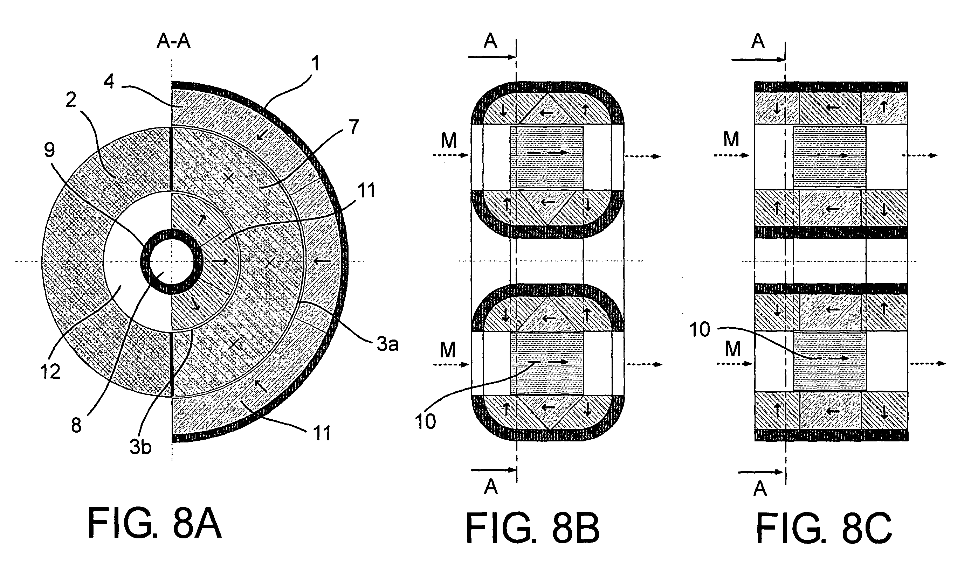

Another type of a 2D rotary magnetic refrigerator/heat pump or a generator is presented in Figures 8A, 8B, 8C, where a coaxial ring 2 is placed between two rings of magnet assembly 4, 11, which consist of plural number of magnets with different direction of magnetization. In order to improve magnetic flux density and prevent the leakage, the magnet assembly may be attached to permeable material rings 1, 9, which lead the magnetic flux in desired azimuth direction. Air gaps 3a and 3b, respectively located between the coaxial ring 2 and the external magnet assembly ring 4 and between the coaxial ring 2 and the internal magnet assembly ring 11 should be as small as possible.

In this case, the magnetic flux stream is not in an azimuth direction of coaxial ring, but in axial direction, which is also the preferable direction of the fluid flow. However, the basic concept of performing the direction of magnetic flux stream (see arrow 10) perpendicular to the direction of magnet "north-south" pole is still remaining.

This kind of solution enables a wide distribution of magnetic flux density depending on specific application, which determines how large "area" or volume needs to be magnetized. In order to prevent leakage and improve the magnetic flux direction and also density, magnet assembly may be attached to the permeable material 1, 9, which may take different kind of forms. The available space 8 and 12 may serve for piping connections, valves, axes, motor, generator, etc. The part of coaxial ring with the highest magnetic flux density 7 is shaded and may take any kind of desired volume or face surface, depending on specific application. It means that at least a part of the shaded 7 volume has the highest temperature in the entire coaxial ring. The change of the magnetic flux density may be performed by rotation of magnet assemblies, by rotation of coaxial ring, or by rotation of both. The magnet assembly rings are performed in such a manner, that the main stream of magnetic flux flows somehow perpendicular to the north-south pole connection, similar as in Figures. 1-7. The fluid may be any kind of fluid, suspension, liquid, nanofluid, gas. The fluid may flow in different ways, depending on specific application, however, preferably in axial direction through the coaxial ring.

One should note that there exist many different configurations of the special magnet assembly proposed by this invention. Similar as in the cases before, the use of inserts of highly permeable material may improve the performance. Crosses present the magnetic flux direction in the direction from the reader and small dotted circles present magnetic flux direction to the reader.

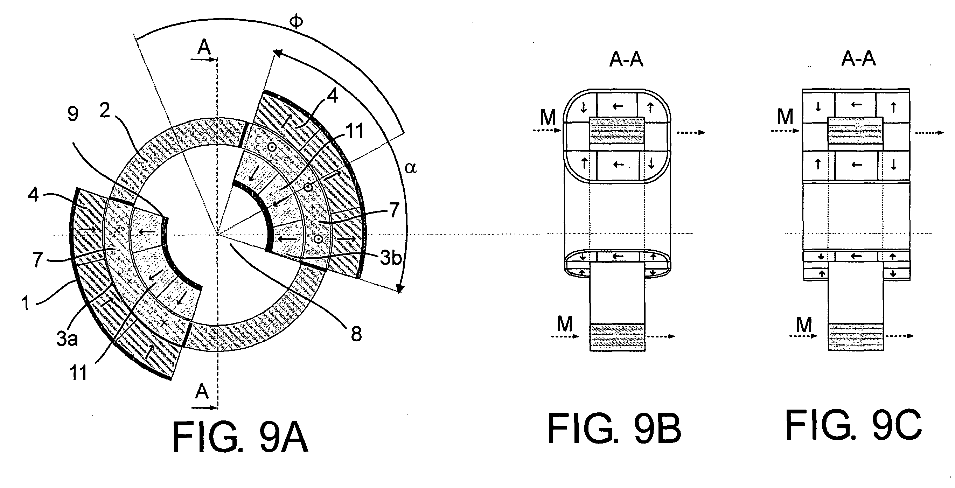

Another example is presented in the Figures 9A, 9B and 9C. Instead of having only one area of magnetization of the coaxial ring 2, there may exist plural number of magnet assemblies 4, 11, depending on specific application. The one in the Figures 9A, 9B and 9C shows example with two magnet assemblies 4, 11 and therefore two regions 7, where the magnetic flux density is highest. The coaxial ring 2 rotates through magnetic field, performed by two permanent magnet assemblies 4, 11 on each side of the ring. The magnet assemblies may be attached also to the permeable material 1, 9 in order to prevent magnetic flux leakage, to better orient magnetic flux and consequently increase the magnetic flux density in desired area. The shaded region presents a region with the highest magnetic flux density 7. The angle α denotes the region which is occupied by permanent magnet and this, may vary depending on specific application. The working fluid flows (see arrow M) through the structure of coaxial ring preferably in axial direction. The central space 8 may be used for axle, fluid connections, valves or some other mechanisms and elements. One should note that instead of coaxial ring 2, the arrangement allows also rotation of magnet assemblies. The fluid direction is preferably axial one and the connections or/and axial directions may vary depending on specific application. The magnetic flux density distribution would look similar to one presented in Fig 2, with the difference that the magnetic flux direction in this particular case is not in azimuth direction, but in axial one. The basic principle, that the magnetic flux is more or less parallel to the direction of magnetization of "north" and "south" pole magnet is also kept in the case of Figures 9A, 9B and 9C. Crosses present the magnetic flux direction in the direction from the reader and small dotted circles present magnetic flux direction to the reader.

Figures 8A, 8B, 8C and 9A, 9B 9C present the second principle of a 2D solution. It differs from solutions in Figures. 1-7 in the direction of magnetic flux, which is in Figures 1-7 in azimuth direction in the coaxial ring 2, whereas in the case of Figures. 8 and 9, the magnetic flux is oriented in axial direction. In both cases the fluid flow is preferably in axial direction through the coaxial ring 2. The shape of the magnet assembly may be performed also in other, non-rounded shape, depending on specific application.

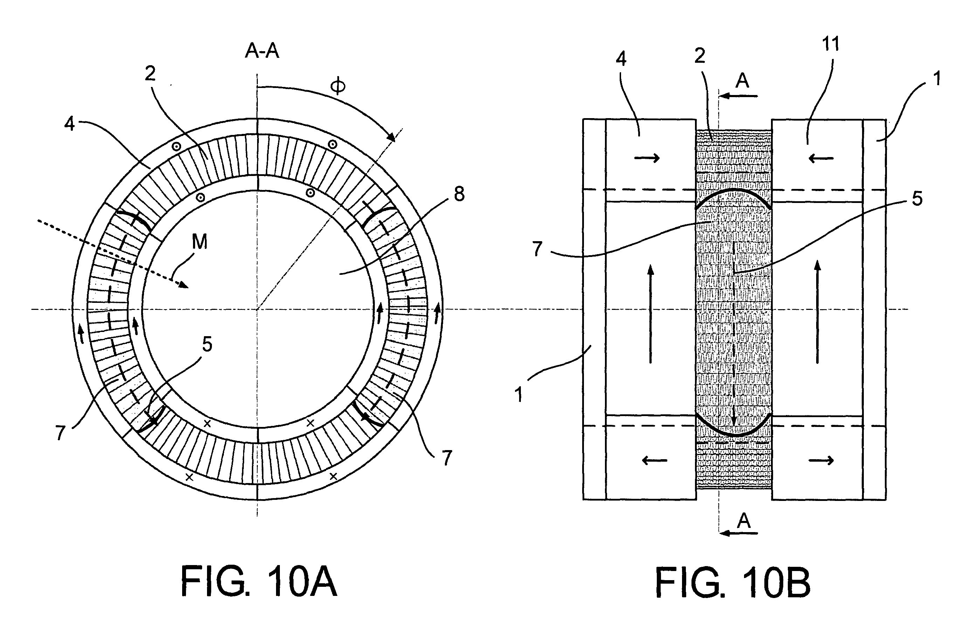

Another principle of this invention is shown in Figures 10, 11 and 12. In this particular case, the fluid flows preferably through the coaxial ring 2 in radial direction, whereas the magnetic flux flows, at least in regions with the highest magnetic flux density 7, in azimuth direction. Similar as for all the cases before, the change of the magnetic flux density may be performed by the rotation of coaxial ring 2, by rotation of permanent magnet assemblies 4, 11 or in some special cases by rotation of both.

According to the Figures 10A and 10B, the coaxial ring 2 has a full or a porous structure, which enables flow of the fluid preferably in radial direction (see arrow M). The fluid flow may be performed anywhere in a 360° of the coaxial ring 2, depending on specific application. The fluid flow may also differ by introduction of plural fluids or even directions to the coaxial ring 2. The magnet assemblies 4, 11 in the Figures 10A, 10B enable two regions 7 with the highest magnetic flux density. This is performed by the special arranged magnets, which are positioned at the side of the coaxial ring. The two magnet assemblies 4, 11 may vary in their diameters, depending on specific application. These two magnet assemblies 4, 11 may also be attached to the permeable material 1 in order to prevent magnetic flux leakage, to orient the magnetic flux better and to obtain higher magnetic flux density. The magnetic flux in the region of highest density flows in azimuth direction 5. The available central space 8 may serve for piping connections, valves, axle, shaft or some other mechanism, depending on the specific application. The magnetic flux density variation looks similar as in Fig.2. The shape of the magnet assembly may be performed also in other, non-rounded shape, depending on specific application.

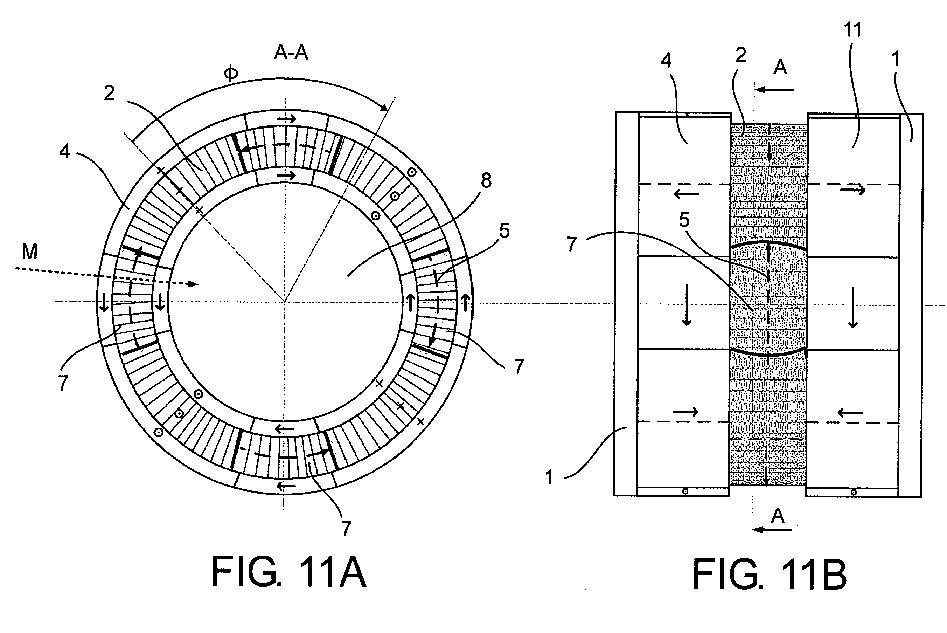

Figures 11A and 11 B show an example which is similar to the one of Figures 10A and 10B, but the device shows four different zones of highest magnetic flux density 7. The magnetic flux density variation looks similar as in the Figures 4A and 4B.

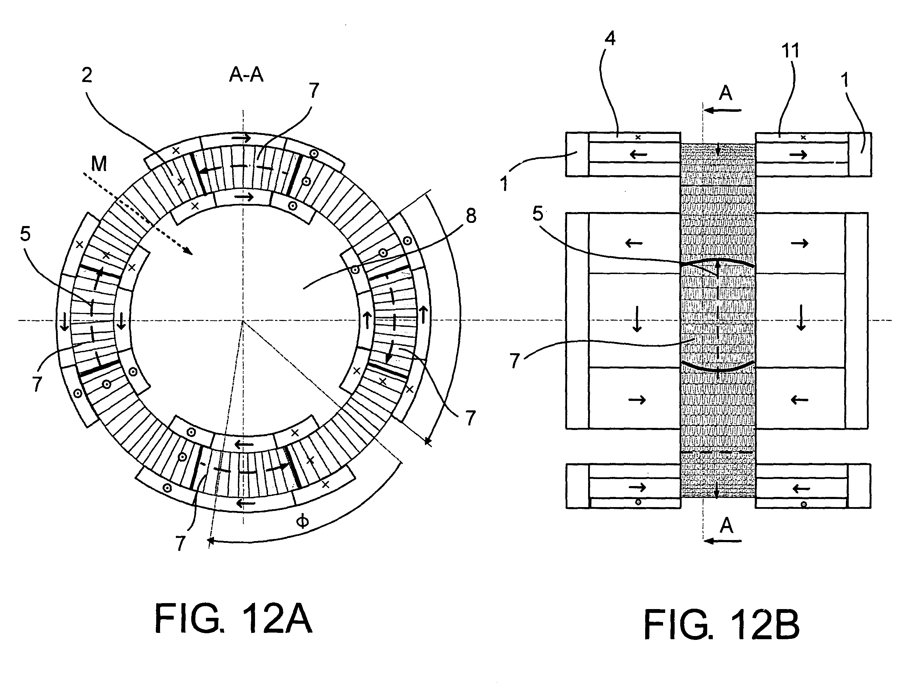

One should note, that configurations e.g. in Figures 10 and 11 may be presented also by a plural number of magnet assemblies, which may vary depending on specific application. Figures 12A and 12B show such an example with four magnet assemblies. Crosses present the magnetic flux in the direction away from the reader and dotted circles present magnetic flux in a direction to the reader. The shape of the magnet assembly may be performed also in other, non-rounded shape, depending on specific application.

Figures 12A and 12B represent a four spot 2D rotary magnetic refrigerator/heat pump or a generator preferably with a radial flow of the working fluid through the coaxial ring 2 and with plural number of magnet assemblies 4, 11. The shaded regions 7 represent the areas with the highest magnetic flux density. Arrow M shows the flow of the working fluid that may be performed in any direction at 0 to 360° angle.

One should note in solutions of Figures. 10 - 12, there is a possibility to mount on the coaxial ring also a full or a porous permeable material structure before entrance and after the exit of the fluid flow.

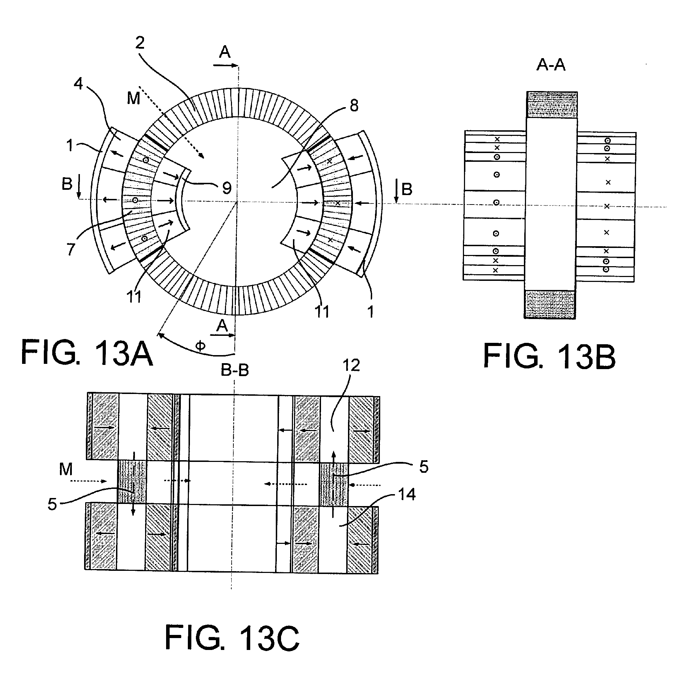

Similar two cases as shown in Figures.10 - 12, but with an axial flow of magnetic flux, are presented in Figures 13-14.

According to the Figures 13A, 13B and 13C, the coaxial ring 2 rotates through the magnetic field, produced by two magnet assemblies 4, 11. Permeable material 1, 9 may be attached in order to improve the desired magnetic flux direction, reduce its flux leakage and improve the magnetic flux density. Shaded area 7 denotes the region, where the highest magnetic flux density occurs. This region may vary depending on the size and/or number of the magnet assemblies. The fluid flow (see arrow M) may be in any kind of direction along 360° as well as it may flow in the directions in-out or out-in from the coaxial ring. The shape of the magnet assembly may be performed also in other, non-rounded shape, depending on specific application. The central space 8 may serve for different applications, e.g. shaft, axle, motor placement, pump placement, piping, valves, etc. The magnetic flux direction of one magnet assembly does not necessary follow the direction of other magnet assembly.

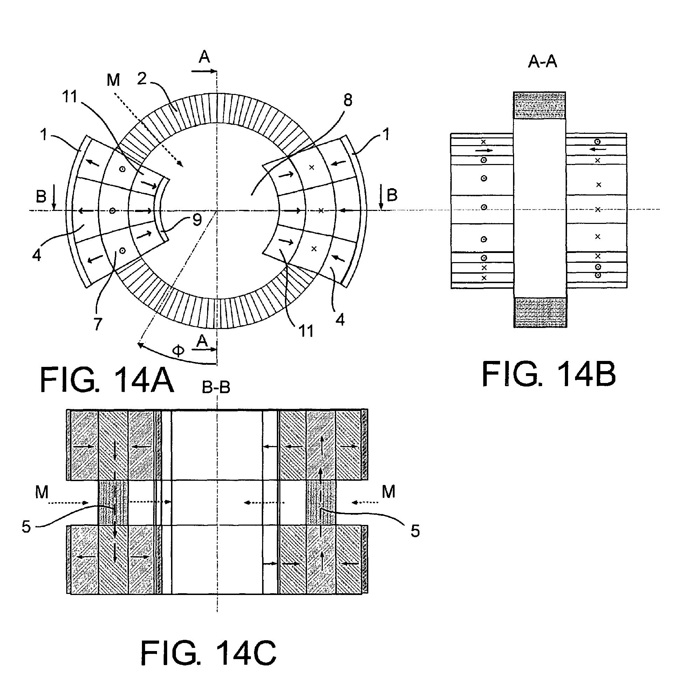

As for the other cases of this invention, permanent magnets do not need necessary to be attached to the permeable material 1, 9, as shown in Figure 13A. The area marked by 12 and 14 enables use of full or a porous highly permeable materials in order to improve the magnetic flux density inside coaxial ring 2. The inner permanent magnet assembly 11 is not necessarily attached to the permeable material. The magnetic flux direction is indicated in Fig 13C with reference number 5. Improvement according to the Figure 13C may be performed also by introducing additional magnets, as denoted in the Figures 14A, 14B and 14C.

Figure 14 shows a "two" spot 2D rotary magnetic refrigerator/heat pump or a generator, similar to that of Figures 13A, 13B and 13C, preferably with a radial flow of the working fluid through coaxial ring 2, with plural number of magnet assemblies 4, 11 and with magnetic flux in axial direction comprising an additional use of magnets. The flow of the working fluid (see arrow M) may be performed in any direction between 0 to 360° angle. The coaxial ring 2 may have a special full or a porous structure.

All the 2D solutions presented in the Figures 1 to 14 cannot reach so high magnetic flux density, as this is the case, when another dimension is added. A 3D solution of a refrigerator/heat pump or a generator presents a solution, where more than at least two pairs ("north-south") of magnet parts are needed. It means that in a 2D solution, the magnetic flux through the coaxial ring material may be approximately determined only by the two dimensions whereas in a 3D solution not. The 3D solution presents therefore a kind of multipole magnet assemblies, where all the flux lines are oriented in a 3D space in the way that the highest flux density occurs in the ring material.

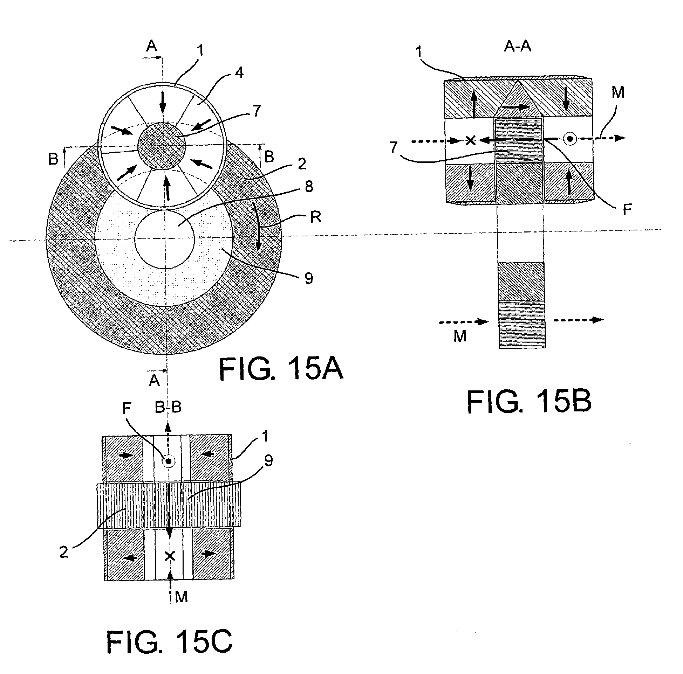

Figures 15 to 22 show examples of a 3D "doughnut" type of magnetic refrigerator/heat pump or a generator. According to the Figures 15A, 15B and 15C, the magnet assembly 4 is formed by plural number of magnets which are assembled to perform a kind of a ring structure. There exist possibility also to perform a ring shaped magnet with the magnetization directions from or toward its axis centre. To this magnet assembly 4, the permeable material 1 may be attached. The magnetic flux density - in this particular case - is the highest in the central part 7 where all the flux is concentrated. The magnetic flux (see arrow F) flows in this case in an axial direction, as well as the working fluid preferably does (see arrow M). There may be different variations on the direction, not only as shown in the Figures 15. The shape of the magnets may be performed also in some other kind of shape, which enables the same principle. This is very important when simple practical solutions are needed. The coaxial ring 2 rotates through the magnetic field (note that also magnet assembly may rotate instead of coaxial ring 2 and a specially ring-shaped permeable material 9 may be attached to it in order to improve the magnetic flux direction and consequently the magnetic flux density in the coaxial ring. The free space 8 may serve for the driving axle or any other elements and mechanisms, depending on a specific application. The arrow R denotes the rotation of the coaxial ring, which may be also in other direction. One should note that also magnet assembly could rotate instead of coaxial ring. Before the working fluid (see arrow M) enters the coaxial ring 2 and after it, a full or a porous structure of permeable material may be placed at that position in order to improve the magnetic flux orientation and consequently the magnetic flux density in the coaxial ring 2. A dotted circle presents in the view B-B a magnetic flux direction (see arrow F) toward the observer and the small cross presents the magnetic flux direction from the observer. The ring may contain in any of presented solutions a permeable material in order to enhance the "effective" magnetic permeability.

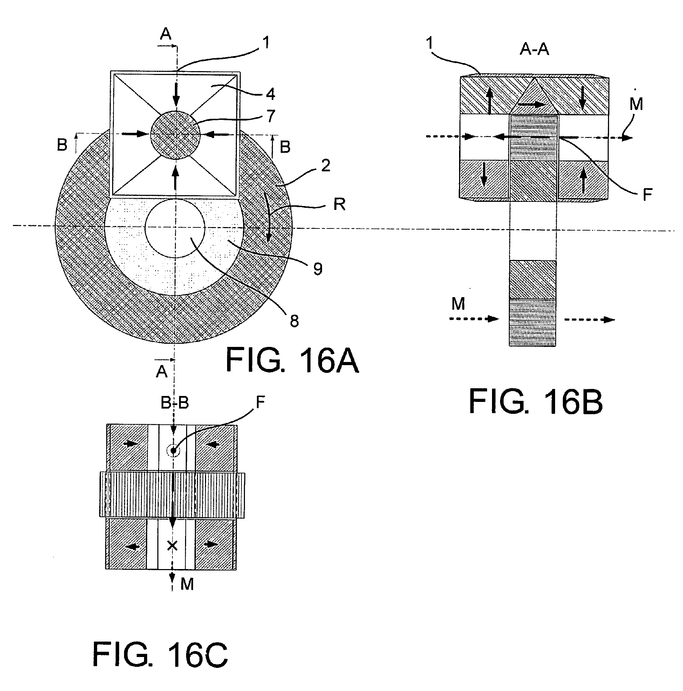

One of other types of shapes of the permanent magnet assembly is shown in the Figures 16A, 16B and 16C representing a cubic "one spot" 3D "doughnut" type of the rotary magnetic refrigerator/heat pump or a generator preferably with an axial flow of the working fluid through coaxial ring 2, and with magnetic flux in axial direction.

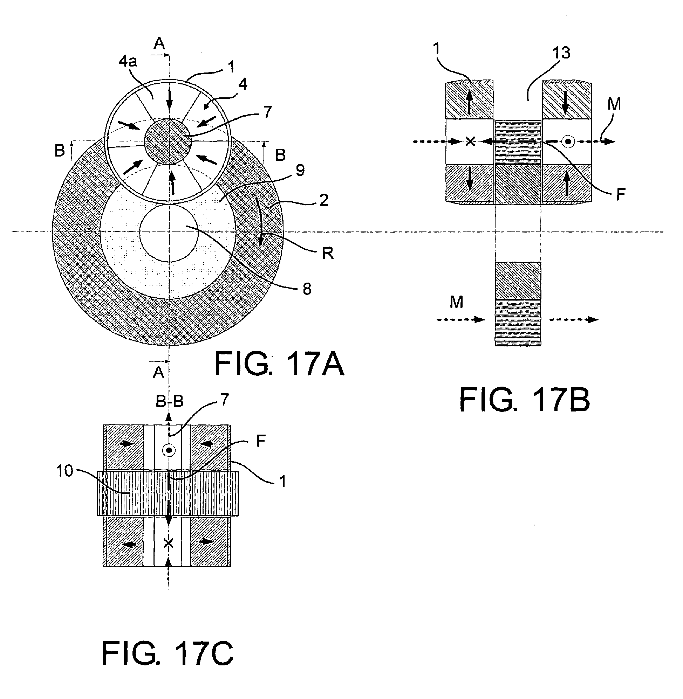

A special case is presented in the Figures 17A, 17B and 17C. In this particular case, the top magnet part is not used in such a way, that an empty (13) space is available. This enables magnet assembly performed in two separated parts, each from the side of the coaxial ring. The magnetic flux density in this case will not be so high as in the cases of the Figures. 15- 16; however, it presents a much simpler configuration.

The Figures 17A, 17B and 17C represent a "one spot" 3D "doughnut" type of the rotary magnetic refrigerator/heat pump or a generator preferably with an axial flow of the working through coaxial ring 2, and with magnetic flux in axial direction, performed in magnet assembly 4 with radial magnetization directions of magnets. The region 7 represents the area with the highest magnetic flux density. Permanent magnet shape may vary depending on specific application. The reference 9 represents specially shaped permeable material. Reference 8 represents the available space. The rotation direction of the coaxial ring 2 is indicated by arrow R. The entry space for possible permeable material that may be in a full or a porous structure, where fluid flows through, is indicated by the reference 10. The magnetic flux direction F is in the direction to the observer. M represents the fluid flow direction (may be performed in any position or multiple positions in the coaxial ring, with possible different directions, preferable in axial direction). F represents the magnetic flux direction through the structure with the highest magnetic flux density 7.

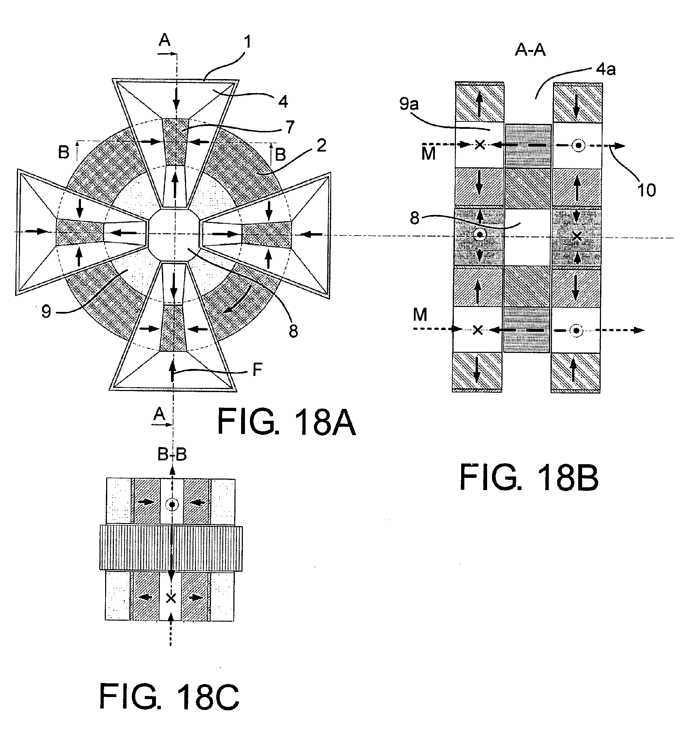

Figures 18A, 18B and 18C show an example of performing a "four spot" 3D "doughnut" type of the rotary magnetic refrigerator/heat pump or a generator preferably with an axial flow of the working fluid through coaxial ring 2, and with magnetic flux in axial direction, performed in separated magnet assemblies 4. Reference 1 represents permeable material. The region 7 has the highest magnetic flux density. The reference 8 represents a central space. Magnetization direction F may be also in opposite direction, not necessary all the magnet assemblies have the same magnetization direction. The entry space 9a for possible permeable material, which may be a solid or a porous structure, is a space where fluid flows through. The fluid flow direction M (may be performed in any position or multiple positions in the coaxial ring 2, with possible different directions, preferable in axial direction. The reference 4a represents an empty space.

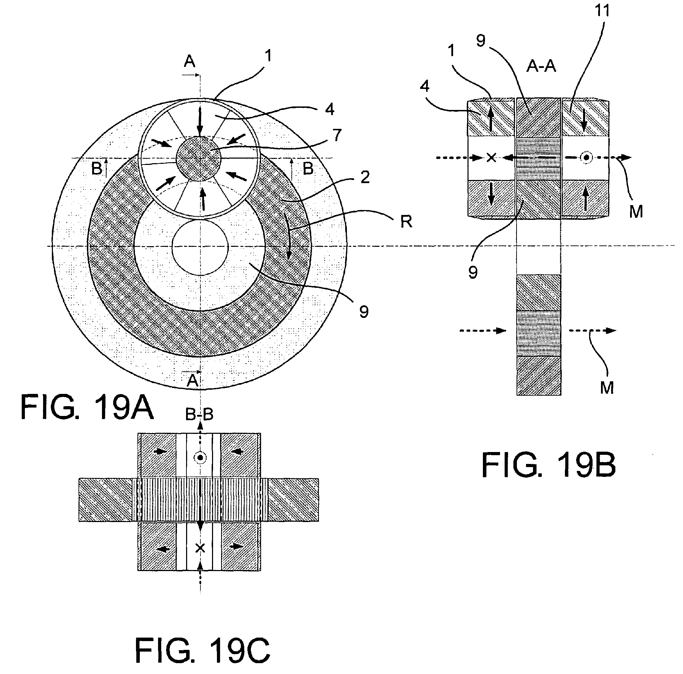

Figures 19A, 19B and 19C show a similar case as the one of the Figures 17A, 17B and 17C, where instead of using an empty space, a permeable material is placed in order to enhance the magnetic flux density in the coaxial ring. The represented "one spot" 3D "doughnut" type of the rotary magnetic refrigerator/heat pump or a generator preferably with an axial flow of the working fluid through coaxial ring 2, and with magnetic flux in axial direction, is performed in separated magnet assemblies (e.g. 4 and 11). It comprises permeable material 1 and 9, and 7 being the region with the highest magnetic flux density.

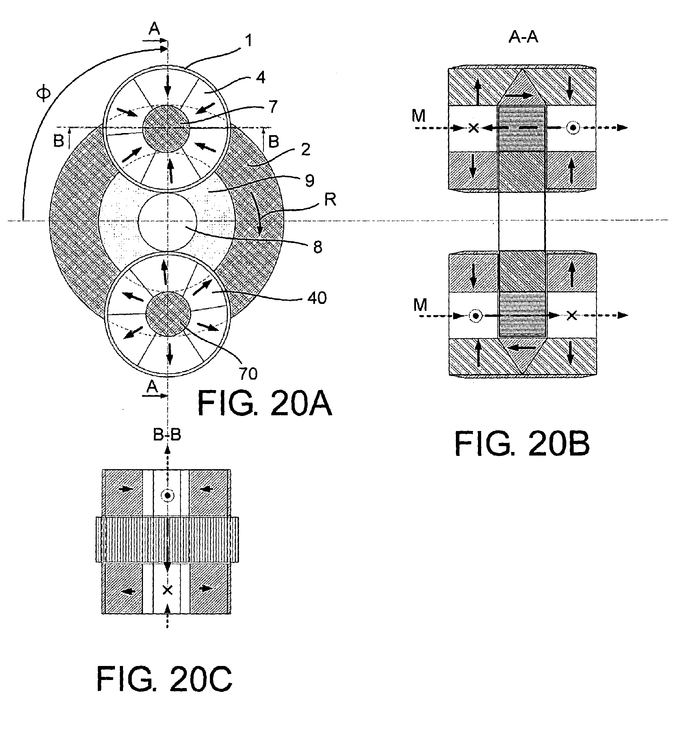

One should note that in any of solutions, presented in e.g. Figures 15 to 19 a plural number of "doughnuts" like magnet assemblies may be performed. An example of the use of two magnet assemblies is presented in the Figures 20A, 20B and 20C representing a "two spot" 3D "doughnut" type of the rotary magnetic refrigerator/heat pump or a generator preferably with an axial flow of the working fluid through coaxial ring 2, and with magnetic flux in axial direction performed in separated magnet assemblies 4 and 40. References 7 and 70 represent the regions with the highest magnetic flux density.

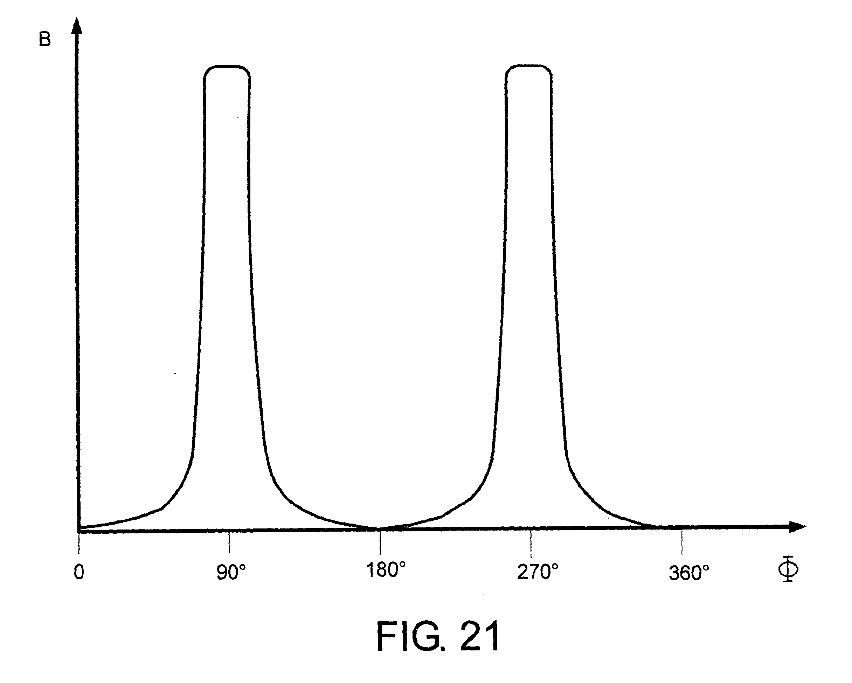

Figure 21 shows an approximate magnetic flux density distribution for the case presented in Figures 20A, 20B and 20C.

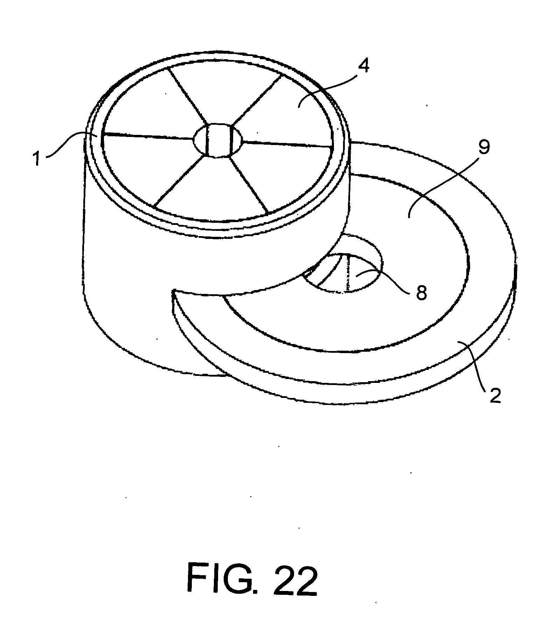

Figure 22 shows a 3D drawing example of the "doughnut" type magnetic refrigerator/heat pump or a generator, presented in the Figures 15A, 15B and 15C.

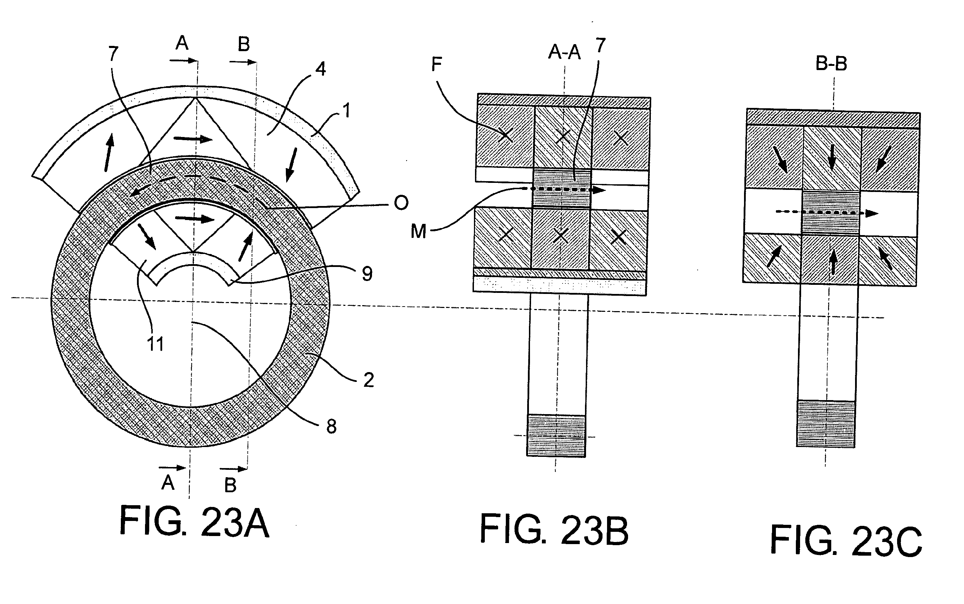

Another type of a 3D solution may be presented with a "magnetosphere" like magnetic refrigerator/heat pump or a generator, where the principle is based on the earth magnetosphere, for which it is known, that the highest magnetic flux density is in the centre and magnetic flux lines circulate in space (in our case through magnet assemblies). Figure 23 shows an example of a 3D "magnetosphere" like magnetic refrigerator/heat pump or a generator.

Figures 23A, 23B and 23C represent a "one spot" 3D "magnetosphere" type of the rotary magnetic refrigerator/heat pump or a generator preferably with an axial flow of the working fluid through coaxial ring, and with magnetic flux in azimuth direction. It comprises a coaxial ring 2, a permanent magnet assembly 4, 11 with the magnetization directions of magnets (permanent magnet assembly shape may vary depending on specific application), permeable material, 1, and 9. The region 7 has the highest magnetic flux density. The reference 8 represents an empty central space. The direction of magnetic flux from the observer is designated by the reference F and the preferable fluid flow is represented by arrow M.

One should note, that before the working fluid enters and after it leaves the coaxial ring 2 there may be placed also a full or porous structure of the permeable material. The ring may contain a permeable material in order to enhance the "effective" magnetic permeability.

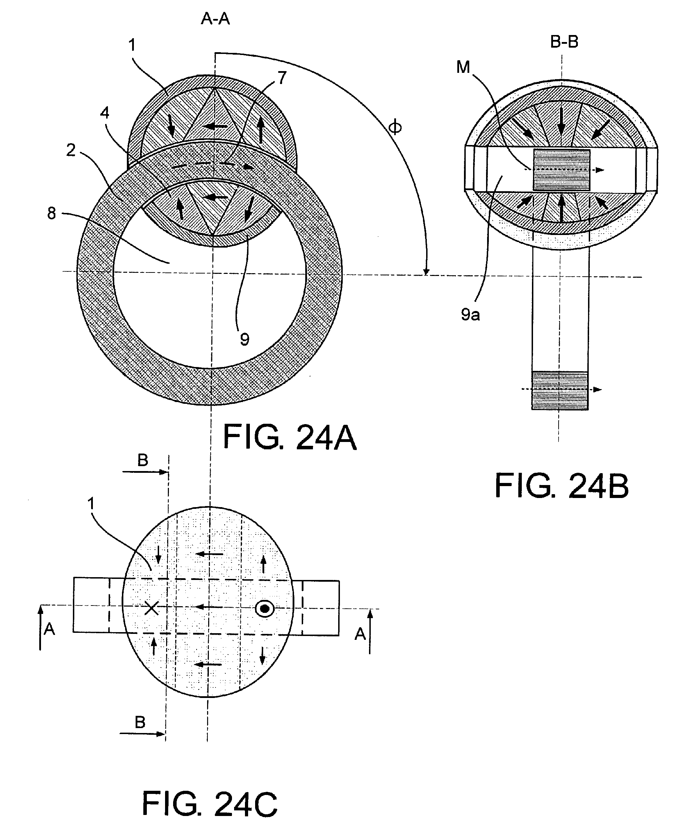

Figures 24A, 24B and 24C represent a "one spot" 3D "magnetosphere" type of the rotary magnetic refrigerator/heat pump or a generator preferably with an axial flow of the working fluid through coaxial ring, and with magnetic flux in azimuth direction. The device comprises a coaxial ring 2 and a permanent magnet assembly 4 with the magnetization directions of magnets (permanent magnet assembly shape may vary depending on specific application with permeable material 1, 9. The region 7 has the highest magnetic flux density. The central empty space has the reference 8. The permanent magnet assembly 4 is represented with the magnetization directions of magnets (permanent magnet assembly shape may vary depending on specific application), Arrow M shows the preferable fluid flow direction. The central space 9a - where fluid flows through - may be used for location of a permeable solid or porous material. F1 in Figure 26C represents magnetic flux direction below the coating (which is not necessary) of the permeable material to better illustrate the magnetic flux lines.

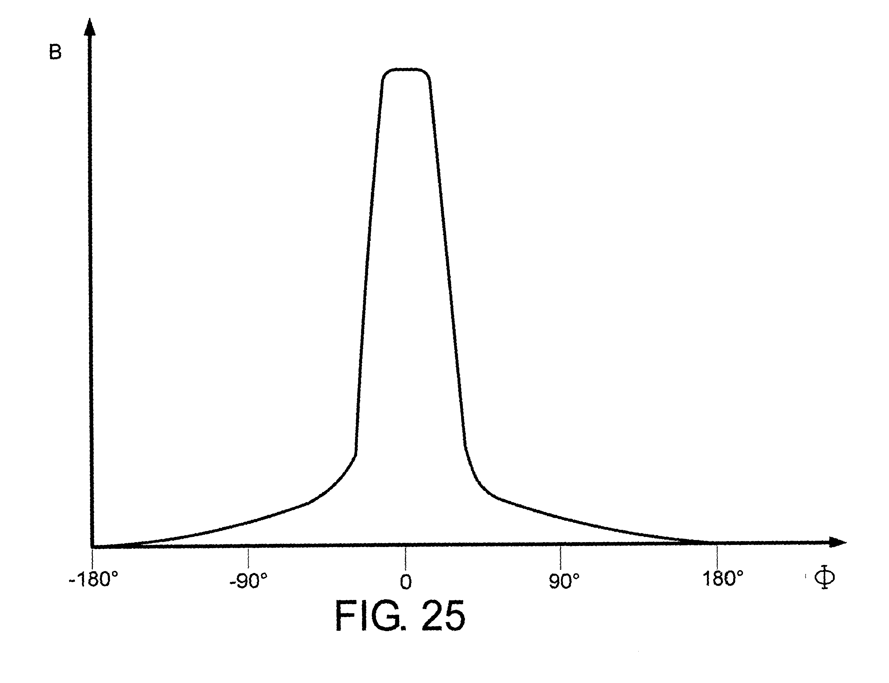

Figure 25 shows an example of magnetic flux distribution in a "one spot 3D magnetosphere" type of magnetic refrigerator/heat pump or a generator.

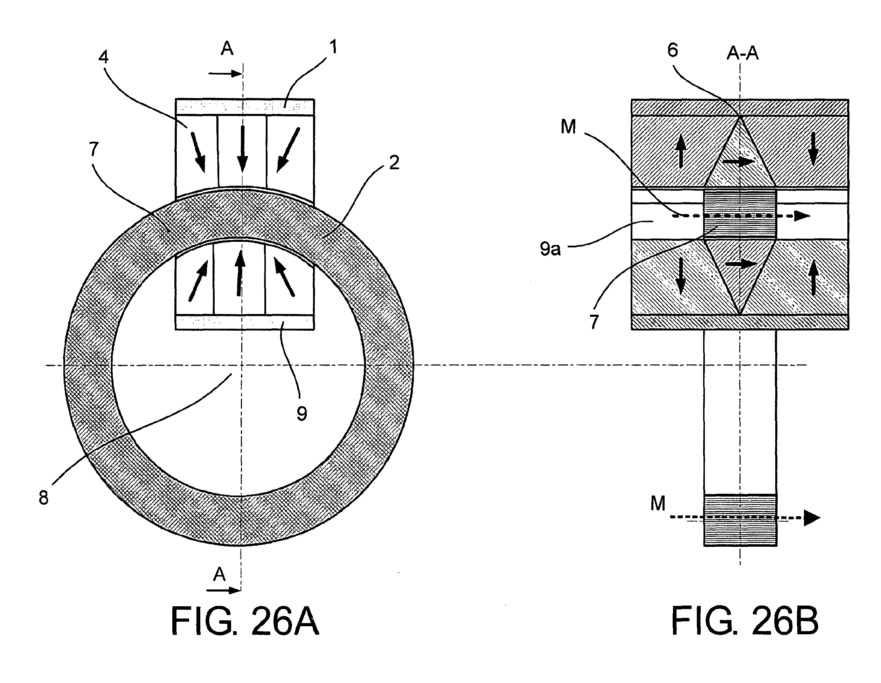

Another type, which differs from principles shown in Figures 23 to 24 is presented in the Figures 26A and 26B. The main difference compared to the other figures is that the magnetic flux direction through the part 7 of coaxial ring 2 with the highest magnetic flux density is in axial direction. The axial direction is also the preferable direction of the fluid flow (see arrow M). With this type of magnetic refrigerator/heat pump or a generator one may perform longer coaxial rings. Figures 26A and 26B represent a "one spot" 3D "magnetosphere" type of the rotary magnetic refrigerator/heat pump or a generator preferably with an axial flow of the working fluid through coaxial ring 2, and with magnetic flux in axial direction. The permanent magnet assembly 4 with the magnetization directions of magnets (permanent magnet assembly shape may vary depending on specific application). The region 7 presents the highest magnetic flux density. The permanent magnet assembly 4 is represented with the magnetization directions of magnets (permanent magnet assembly shape may vary depending on specific application). Permeable material has the references 1, 9. The reference 8 shows the central empty space.

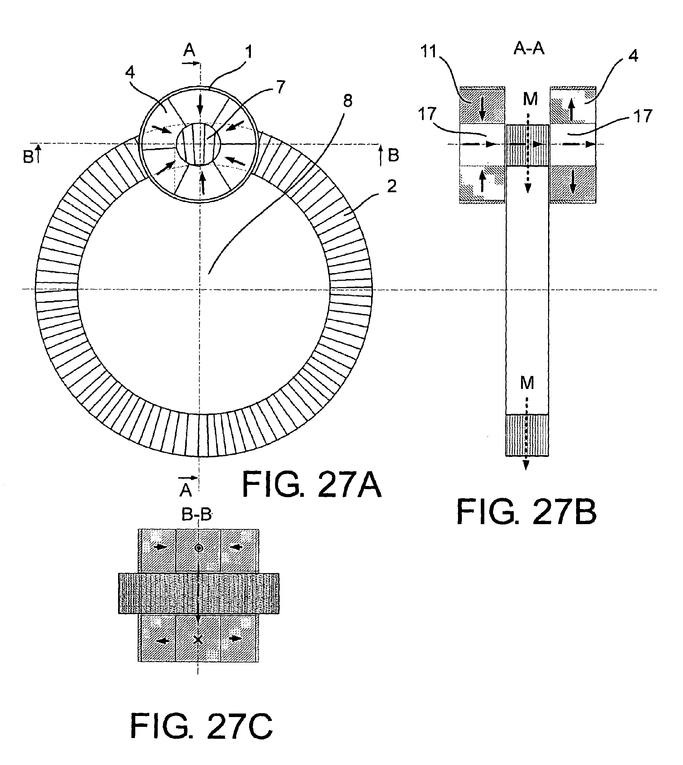

A 3D "doughnut" type magnetic refrigerator/heat pump or a generator may be performed also in the way that the fluid flows preferably through the coaxial ring 2 in radial direction. Such a device is presented in the Figures 27A, 27B and 27C representing a "one spot" 3D "doughnut" type of the rotary magnetic refrigerator/heat pump or a generator preferably with an radial flow of the working fluid through coaxial ring 2, and with magnetic flux in axial direction. Reference 1 represents permeable material and references 4, 11 representing the permanent magnet assembly with the magnetization directions of magnets (permanent magnet assembly shape may vary depending on specific application). Reference 7 is the region with the highest magnetic flux density and reference 8 is the central empty space. The space 17 may be used for locating a permeable material or a magnet part may be used. The central space 8 - where fluid flows through - may also be used for a permeable solid or porous material.

In all the cases presented here, a plural number of magnet assemblies may be used, not only one, as for example shown in Figures 23 to 27. All the cases in these figures may contain also a permeable full or porous structure material before and after the fluid enters and leaves the coaxial ring. All the cases may be performed in such a manner, that the ring contains permeable material in order to enhance the "effective" magnetic permeability.

All the solutions presented in Figures 1 to 27 show possible applications with high magnetic flux density. In special cases, even these solutions may not be sufficient. In order to obtain a giant magnetic flux density by using permanent magnets, an idea, based on the principle of the gravity field around black holes could serve for the basis. In this particular case, all the magnetic flux has to be concentrated in the centre of a specially performed permanent magnetic structure, and from that centre, the magnetic flux is oriented in a rather narrow path, which may be enabled by use of magnets or better highly permeable material. This may be done in plural number of such narrow paths, however, using one or two would perform a kind of magnetic flux jet in the path. This jet however may be directed through the e.g. magnetocaloric material, what leads to very high magnetic flux density in it. Such configuration may be especially interesting when low power but rather larger temperature difference between heat source and heat sink is required, even without using a regenerative process.

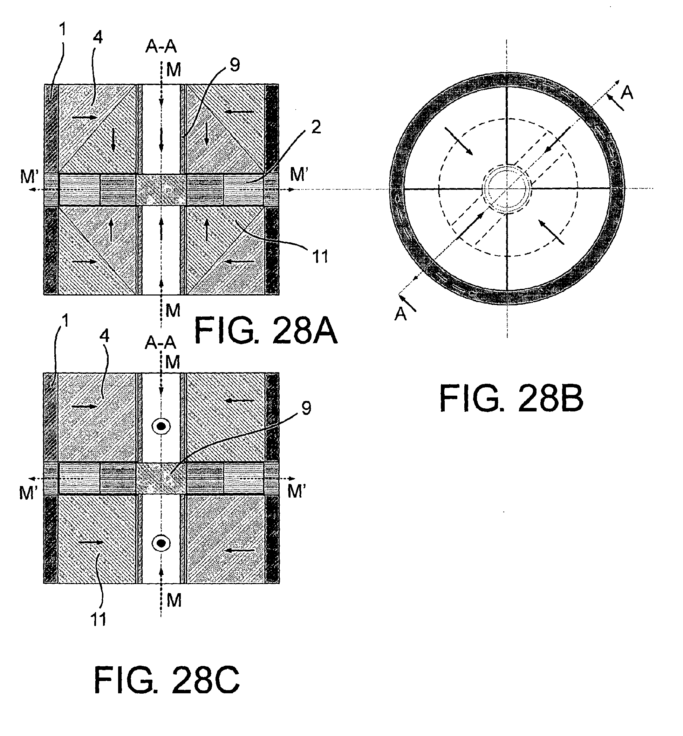

Figures 28A, 28B and 28C show an example of the above mentioned solution. Two separated permanent magnet assemblies 4, 11 have magnet parts magnetized in such a way, that all the magnetic flux from the lower assembly, as well as upper assembly is directed to the centre of the whole structure. The centre may contain a full or porous structure of permeable material, may present specially directed magnet, or may even present a magnetocaloric material (e.g. the magnetocaloric material is performed in a kind of non-symmetric structure, so the fluid flow could flow through it in axial direction. For this case the centre of the whole structure serves for an attraction of the magnetic flux, so it is performed by the full or porous structure of highly permeable material 9. This centre part of highly permeable full or porous material 9 presents a rounded shape to which two full or porous "channels" made of permeable material (note that in a special case, magnets could be also used), are attached. Both, the "channels" and the centre part, therefore, rotate and orient the magnetic flux, which was earlier coming to the centre part. The rotation may be performed by different means. The magnetocaloric material (in the case of the generator material with magnetization dependence on temperature and magnetic field) may also be attached to permeable materials however, this is not the case presented in the Figures 28a, 28b and 28c. By rotation of permeable material, the magnetic flux density changes in the case of Figures. 28A, 28B and 28C in the e.g. static magnetocaloric material (in the generator inverse process), and therefore enables a refrigeration/heat pumping or a power conversion. This is enabled by a use of fluids, which may preferably flow into the whole structure in axial direction (see arrows M) or in radial one (see arrows M'). It may flow through the permeable material structure or around it. In a special case the fluid may be directed only from the outer side of the whole structure. The fluid flow may be applied anywhere in the coaxial ring structure, depending on specific application. To better orient the magnetic flux, at the circumferential surface of the whole structure, a permeable material 1 may be used.

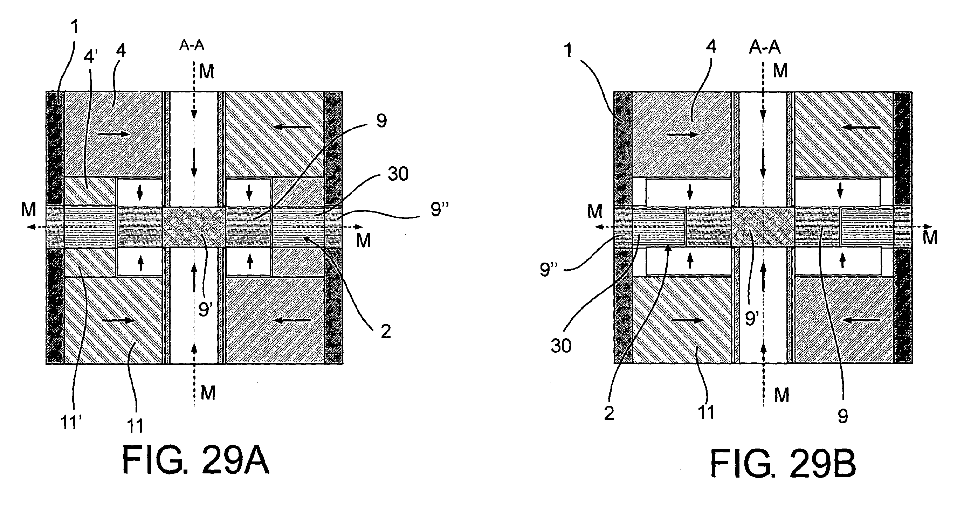

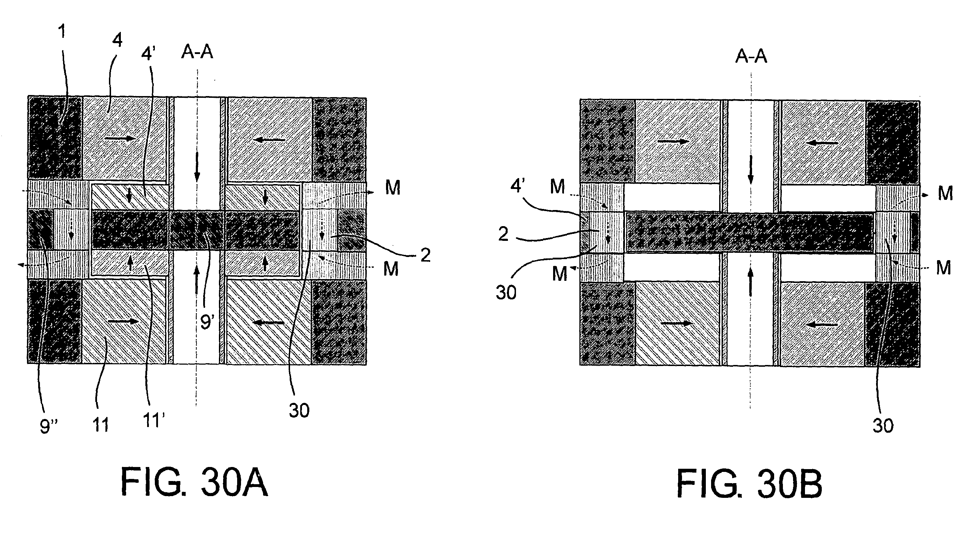

Figures 29A, 29B and 30A, 30B show examples of the A-A views of different solutions, based on the idea presented in Figure 28. The Figures 29A and 29B show special configurations of a 3D magnetic refrigerator/heat pump or a generator comprising a permeable material 1, a coaxial ring 2, a permanent magnet assembly 4, 11 with magnetization directions of magnet parts, nonmagnetic material 4', 11' (Figure 29A), permanent magnet with magnetization direction attached to the permeable material 9 (Figure 29B), the central part of the structure 9' being made of permeable material. A magnetocaloric material (in the case of generator the material with magnetization dependence on temperature and magnetic field) is designated by reference 30. The arrows M correspond to the preferable working fluid flow. Reference 9" correspond to permeable material (may be also some other material depending on specific application). The permeable material 9 has preferably a channel like structure. According to the Figures 29A and 29B, a permanent magnet may be also attached to the permeable material and may rotate with it. Different other solutions are possible.

Figures 30A and 30B show special configurations of a 3D magnetic refrigerator/heat pump or a generator in which the references 1 and 9 correspond to permeable material, the references 4, 4' and 11, 11' correspond to a permanent magnet assembly with magnetization directions of magnet parts. The centre part of the structure is made of permeable material 9'. The reference 2 represents the coaxial ring. The reference 9" represents a ring shaped permeable material structure positioned around the coaxial ring 2 (it may be also some other material depending on specific application). The reference 30 represents magnetocaloric material (in the case of generator the material with magnetization dependence on temperature and magnetic field). These Figures 30A and 30B show an example, where the fluid flow is preferably flowing only at the side of the whole structure. It means, that the main permanent assembly structure with permeable material is static, as well as it is static the magnetocaloric material (in the case of generator the material with magnetization dependence on temperature and magnetic field). A full or porous structure performed preferably from permeable material has a function to enable the fluid flow through it as to enable better magnetic flux flow to the main magnet assembly with the permeable material.

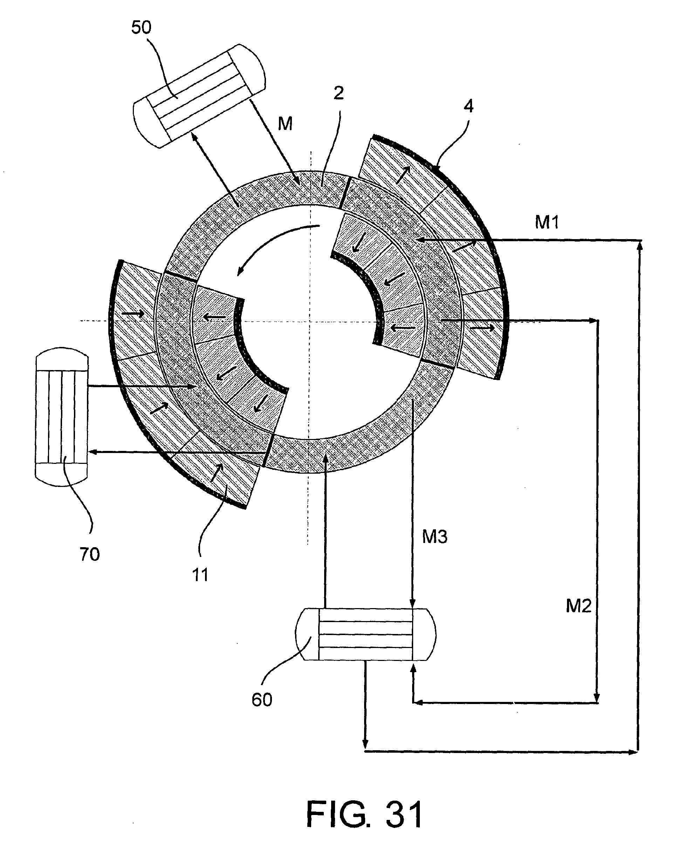

In a special case, the magnetic refrigerator/heat pump and a magnetic generator may be comprised in a single coaxial ring solution. This idea may not be applied only in solutions, presented in this invention, but may be generally applied in any configuration with the ring type and preferably with at least two separated regions of the very high magnetic flux density, performed by any kind of magnet, including permanent ones, which are shown in this invention. Figure 31 shows an example of how to perform such a device based on a drawing in Figure 11. One should note that the idea shown in Figure 31 is only an example. It may also present other kind of fluid connections, heat exchanger, including different types of regeneration and thermodynamic cycles.

Figure 31 shows an example of a heat-driven magnetic refrigerator using a single coaxial ring 2, low heat source heat exchanger for refrigeration 50 with cold fluid flow (see arrow M) flowing back to the coldest part of coaxial ring 2, a permanent magnet assembly 4, 11, cooling fluid (see arrow M1) from the heat exchanger for heat rejection e.g. to ambient, cooling fluid (see arrow M2) to a heat exchanger for heat rejection 60 e.g. to ambient, cooling fluid (see arrow M3) to the heat exchanger 60 for heat rejection e.g. to ambient (may be used also in a regeneration process) a heat exchanger 60 for heat rejection e.g. to ambient (presents intermediate temperature level), a hot heat source heat exchanger 70 (presents the highest temperature level). This main heat source 70 serves for the heat supply to the coaxial ring in order to decrease the magnetization in the coaxial ring. Since the magnetocaloric effect is expected not to be large due to the high temperature level of coaxial ring, the temperature of the coaxial ring in this particular case will still be higher than the one at the level of the heat exchanger 60 for the heat rejection e.g. to the ambient. This heat from coaxial ring may be removed by the fluid M3. The temperature of the coaxial ring is now at such temperature level, that when coaxial ring enters magnetic field performed by the magnet assembly 11 the temperature level of coaxial ring becomes again higher than the temperature level of the heat exchanger 60. Therefore, the fluid flow in M1 serves for heat rejection. The coaxial ring leaves the magnetic field, performed by permanent magnet assembly 4, and due to the magnetocaloric effect, the coaxial ring cools. This cooling energy is used via low heat source heat exchanger 50, which serves to extract cold from the coldest part of the coaxial ring 2 by use of fluid flow. Many different solutions are possible, different connections and different regenerative processes.

It has to be emphasized, that this kind of device may operate also at special conditions, where the heat source is at the ambient temperature level (e.g. ambient air). For instance, the hot heat source heat exchanger 70 is using this energy (heat on the ambient air temperature level). The cold heat exchanger 50 presents the lowest temperature level (used for e.g. refrigeration). The intermediate heat exchanger for the heat rejection 60 rejects heat e.g. to the ground (soil, ground water, etc), which has lower temperature than the ambient air.

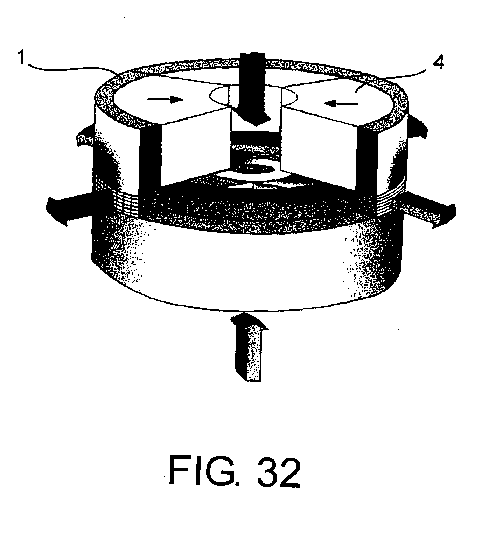

Figure 32 shows a three-dimensional drawing of a special 3D configuration of magnetic refrigerator/heat pump or a generator which could correspond to a concept of the Figure 28. Large arrows present some of possible directions of the working fluid flow.

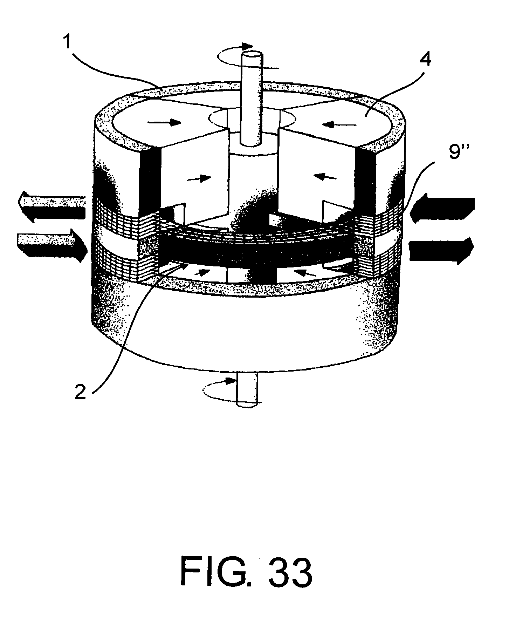

Figure 33 shows a three-dimensional drawing of a special 3D configuration of magnetic refrigerator/heat pump or a generator which could correspond to a concept of the Figures 29 and 30. Large arrows present some of possible directions of the working fluid flow.

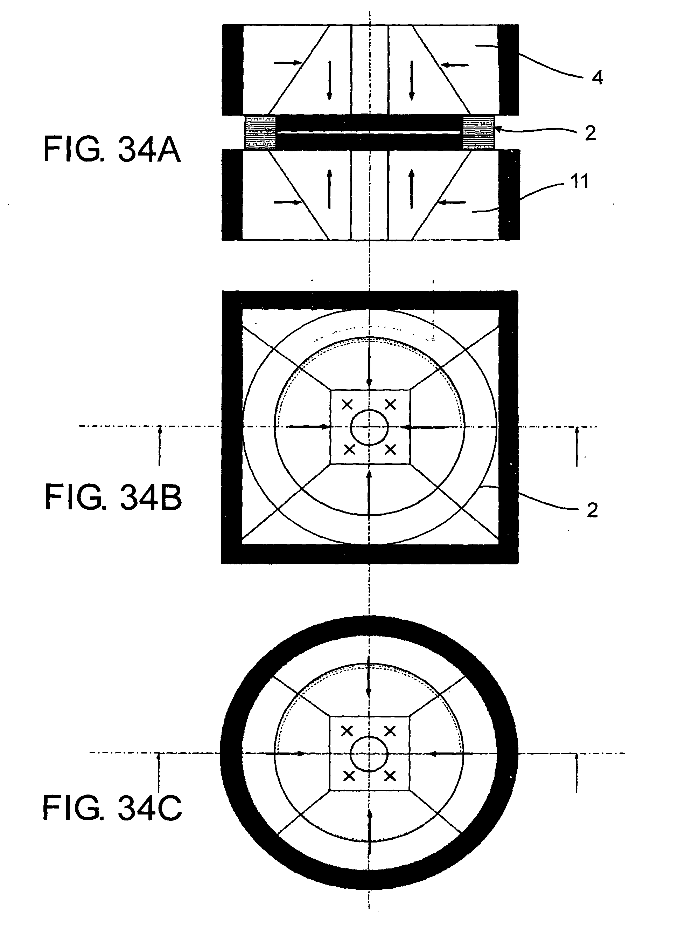

Figures 34A, 34B and 34C show an example of a special 3D configuration of magnetic refrigerator/heat pump or a generator, where the magnetocaloric ring 2 rotates and the working fluid is applied to it - preferably from azimuth position - and also flows through the magnetocaloric ring structure in azimuth direction.

## Claims

1. A magnetocaloric device, especially a magnetic refrigerator, a heat pump or a magnetic power conversion machine comprising, at least a permanent magnet assembly for generating magnetic flux, a rotating ring (2) coaxially disposed to the said permanent magnet assembly, a structure containing magnetocaloric material mounted inside the said rotating ring (2) and means for conducting a working fluid through the said rotating ring, **characterized in that** the permanent magnet assembly (4, 11) comprises a set of permanent magnets and at least one insert of highly permeable material (1, 9) attached to the magnet assembly (4, 11) adapted for creating high magnetic flux densities around and inside of the said rotating ring (2).

2. A magnetocaloric device according to claim 1, **characterized in that** the said permanent magnet assembly is a 2D having approximately two dimensional flow of magnetic flux when considering magnet assembly (4, 11), with such arrangements of magnets that the magnetic flux, where the highest density occurs, is passing the magnetocaloric material, and the magnetic flux through the magnetocaloric material, being at least approximately perpendicular to the magnetization directions of permanent magnet parts, which present "source" and "sink" of magnetic flux. (Figs 1 - 14)

3. A magnetocaloric device according to claim 1, **characterized in that** the said permanent magnet assembly (4, 11) is a 3D having approximately three dimensional flow of magnetic flux when considering magnet assembly, having a three dimensional flow of magnetic flux through the magnet assembly with such specifics, that all the magnetic flux lines concentrate in the magnetocaloric material of the said rotating ring (2). (Figs 15 - 34)

4. A magnetocaloric device according to claim 3, **characterized in that** the said permanent magnet assembly (4, 11) presents a plural number of multipole permanent magnets or arrangements, which are similar to magnetic flux lines in magnetospheres, the magnetic flux through the magnetocaloric material, at least where the highest density of magnetic flux occurs, is at least approximately perpendicular to the magnetization directions of permanent magnet parts, which present "source" and "sink" of magnetic flux.

5. A magnetocaloric device according to claim 1, **characterized in that** the permanent magnet assembly (4, 11) comprises an external ring (4) and an internal ring (11) of permanent magnets and that it comprises an additional special magnet (6) for concentrating the magnetic flux density.

6. A magnetocaloric device according to claim 5, **characterized in that** said external and said internal rings (4, 11) of permanent magnets have the shape of ring parts and extend on an angular sector smaller than 180° (Figs 3A and 3B).

7. A magnetocaloric device according to claim 6, **characterized in that** said external and said internal rings (4, 11) of permanent magnets having the shape of ring parts are respectively attached to an external ring part and an internal ring part of highly permeable material (1, respectively 9) for leading the magnetic flux density in a desired azimuth direction, said ring parts of highly permeable material having a similar angular extension that the ring parts of magnets.

8. A magnetocaloric device according to claim 5, **characterized in that** said external and said internal rings (4, 11) are composed each of a number of magnets with different direction of magnetization having at least four regions (7) with the highest magnetic flux density spaced each from the other by an angle of about 45° and are respectively attached to at least an external ring and an internal ring of highly permeable material (1, 9) for leading the magnetic flux density in a desired azimuth direction.

9. A magnetocaloric device according to claim 5, **characterized in that** said external and said internal rings of permanent magnets (4, 11) have the shape of ring parts and extend on an angular sector of about 180° and are respectively attached to an external ring part and an internal ring part of highly permeable material (1, 9) for leading the magnetic flux density in a desired azimuth direction, said ring parts of highly permeable material having a similar angular extension that the ring parts of magnets.

10. A magnetocaloric device according to claim 1 in which the magnet assembly (4, 11) comprises only an external ring of permanent magnets, **characterized in that** said external ring of magnets (4) has the shape of a ring part and extends on an angular sector of about 180°, said external ring of magnets being attached to an external ring part of highly permeable material (1) for leading the magnetic flux density in a desired azimuth direction, having a similar angular extension that the ring part of magnets and in which the coaxial ring 829 is attached to an internal ring of highly permeable material.

11. A magnetocaloric device according to claim 2, **characterized in that** the permanent magnets are arranged to provide a distribution of the highest magnetic flux density in azimuth direction.

12. A magnetocaloric device according to claim 2, **characterized in that** the permanent magnets are arranged to provide a distribution of the highest magnetic flux density in axial direction.

13. A magnetocaloric device according to claim 1, **characterized in that,** the permanent magnet assembly (4, 11) comprises a first external permanent magnet group and a second internal permanent magnet group, a first fluid gap is located between the first external permanent magnet group, and the rotating ring and a second fluid gap is located between the second internal permanent magnet group and the rotating ring.

14. A magnetocaloric device according to anyone of the preceding claims, **characterized in that** the coaxial ring has a structure containing a magnetocaloric material and is associated with means for enabling the flow of heat exchange fluids in an axial or radial direction.

15. A magnetocaloric device according to claim 1, **characterized in that** it comprises a plural number of permanent magnet assemblies each provides with at least one permanent magnet, the said assemblies being located on both sides of the rotating ring (2), the permanent magnets of each magnet assembly having a radial magnetic flux direction.

16. A magnetocaloric device according to claim 15, **characterized in that,** the permanent magnet assemblies have a first central axis and the rotating ring (2) has a second central axis, both axis being parallel

17. A magnetocaloric device according to claim 15, **characterized in that** the magnet assemblies have a circular shape. (Figs 17A, 17B and 17C)

18. A magnetocaloric device according to claim 15, **characterized in that** the permanent magnet assemblies have an angular shape.

19. A magnetocaloric device according to claim 15, **characterized in that** the permanent magnet assemblies are made of four trapeze-like shape elements located each at an angle of 45° from the neighbour elements.(Figs 18A, 18B and 18C)

20. A magnetocaloric device according to claim 1, **characterized in that** it comprises two magnet assemblies having a first central axis and the rotating ring has a second central axis, both axis being parallel and symmetrically disposed with respect of the central axis of the rotating ring.(Figs 20A, 20B and 20C)

21. A magnetocaloric device refrigerator, a heat pump or a magnetic power conversion machine according to claim 1, **characterized in that** it comprises means for conducting heat exchange fluids in the axial direction of the rotating ring (2).
